# EUROPEAN PATENT APPLICATION

(11) **EP 4 489 507 A1**
(43) Date of publication of application: **08.01.2025**
(21) Application number: 22934108.6
(22) Date of filing: 30.03.2022
(51) Int. Cl.: H04W 76/15, H04W 76/20, H04W 76/30

(54) **WIRELESS COMMUNICATION METHOD, NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); ZHANG, Boyuan, Dongguan, Guangdong 523860 (CN); LENG, Bingxue, Dongguan, Guangdong 523860 (CN)
(74) Representative: RGTH
(86) International application number: PCT/CN2022/084154
(87) International publication number: WO 2023/184257

(57) **Abstract**

Provided are a wireless communication method, a network device, and a terminal device. The method includes: sending, by the network device, first indication information to the terminal device, where the first indication information is used for adding a second connection between the terminal device and the network device, and a first connection is established between the terminal device and the network device.

## Description

### TECHNICAL FIELD

Embodiments of this application relate to the communications field, and in particular, to a wireless communication method, a network device, and a terminal device.

### BACKGROUND

In some scenarios, a remote terminal may be connected to a network through one path (for example, a direct path or a relay path), or may be connected to a network through a plurality of paths (for example, a direct path and a relay path). How to switch to be connected to the network through a plurality of paths when the remote terminal is connected to the network through one path and how to switch to be connected to the network through one path when the remote terminal is connected to the network through a plurality of paths are urgent problems to be resolved.

### SUMMARY

This application provides a wireless communication method, a network device, and a terminal device. By adding a connection between the network device and the terminal device, a connection status between the terminal device and the network device can be converted from single-connection to multi-connection; or by releasing or deactivating a connection between the network device and the terminal device, a connection status between the terminal device and the network device can be converted from multi-connection to single-connection.

According to a first aspect, a wireless communication method is provided and is applied to a network device. A first connection is established between the network device and a terminal device. The method includes:
sending, by the network device, first indication information to the terminal device, where the first indication information is used for adding a second connection between the terminal device and the network device.

According to a second aspect, a wireless communication method is provided and is applied to a network device. A first connection and a second connection are established between the network device and a terminal device. The second connection is in an inactive state. The method includes:
activating, by the network device, the second connection.

According to a third aspect, a wireless communication method is provided and is applied to a network device. A first connection and a second connection are established between the network device and a terminal device. The method includes:
releasing, by the network device, the first connection between the terminal device and the network device; and/or
deactivating, by the network device, the first connection.

According to a fourth aspect, a wireless communication method is provided and is applied to a terminal device. A first connection is established between the terminal device and a network device. The method includes:
receiving, by the terminal device, first indication information sent by the network device, where the first indication information is used for adding a second connection between the terminal device and the network device.

According to a fifth aspect, a wireless communication method is provided and is applied to a terminal device. A first connection and a second connection are established between the terminal device and a network device. The second connection is in an inactive state. The method includes:
activating, by the terminal device, the second connection.

According to a sixth aspect, a wireless communication method is provided and is applied to a terminal device. A first connection and a second connection are established between the terminal device and a network device. The method includes:
releasing, by the terminal device, the first connection between the terminal device and the network device; and/or
deactivating, by the terminal device, the first connection.

According to a seventh aspect, a network device is provided and is configured to perform the method in any one of the first aspect to the third aspect or any implementation of the any one of the first aspect to the third aspect. Specifically, the network device includes units configured to perform the method in any one of the first aspect to the third aspect or any implementation of the any one of the first aspect to the third aspect.

According to an eighth aspect, a terminal device is provided and is configured to perform the method in any one of the fourth aspect to the sixth aspect or any implementation of the any one of the fourth aspect to the sixth aspect. Specifically, the terminal device includes units configured to perform the method in any one of the fourth aspect to the sixth aspect or any implementation of the any one of the fourth aspect to the sixth aspect.

According to a ninth aspect, a network device is provided. The terminal device includes a processor and a memory. The memory is configured to store a computer program. The processor is configured to invoke and run the computer program stored in the memory to perform the method in any one of the first aspect to the sixth aspect or any implementation of the any one of the first aspect to the sixth aspect.

According to a tenth aspect, a chip is provided and is configured to implement the method in any one of the first aspect to the sixth aspect or any implementation of the any one of the first aspect to the sixth aspect.

Specifically, the chip includes: a processor, configured to invoke a computer program from a memory and run the computer program, so that a device on which the chip is installed performs the method in any one of the first aspect to the sixth aspect or any implementation of the any one of the first aspect to the sixth aspect.

According to an eleventh aspect, a computer-readable storage medium is provided and is configured to store a computer program. The computer program causes a computer to perform the method in any one of the first aspect to the sixth aspect or any implementation of the any one of the first aspect to the sixth aspect.

According to a twelfth aspect, a computer program product is provided, including computer program instructions. The computer program instructions cause a computer to perform the method in any one of the first aspect to the sixth aspect or any implementation of the any one of the first aspect to the sixth aspect.

According to a thirteenth aspect, a computer program is provided. The computer program is run on a computer to cause the computer to perform the method in any one of the first aspect to the sixth aspect or any implementation of the any one of the first aspect to the sixth aspect.

Based on the foregoing technical solutions, by adding a connection between the network device and the terminal device, a connection status between the terminal device and the network device can be converted from single-connection to multi-connection; or by releasing or deactivating a connection between the network device and the terminal device, a connection status between the terminal device and the network device can be converted from multi-connection to single-connection.

### BRIEF DESCRIPTION OF DRAWINGS

FIG. 1 is a schematic diagram of an architecture of a communications system according to an embodiment of this application.
FIG. 2 is a schematic diagram of a transport protocol stack in a 5G system.
FIG. 3 is a schematic diagram of a plurality of connections between a terminal device and a network device.
FIG. 4 is a schematic diagram of a single connection between a terminal device and a network device.
FIG. 5 is another schematic diagram of a single connection between a terminal device and a network device.
FIG. 6 is a schematic diagram of a wireless communication method according to an embodiment of this application.
FIG. 7 is a schematic interaction diagram of a wireless communication method according to an embodiment of this application.
FIG. 8 is a schematic interaction diagram of a wireless communication method according to another embodiment of this application.
FIG. 9 is a schematic diagram of another wireless communication method according to an embodiment of this application.
FIG. 10 is a schematic diagram of a connection between a terminal device and a network device.
FIG. 11 is another schematic diagram of a connection between a terminal device and a network device.
FIG. 12 is a schematic diagram of still another wireless communication method according to an embodiment of this application.
FIG. 13 is a schematic diagram of still another wireless communication method according to an embodiment of this application.
FIG. 14 is a schematic diagram of yet another wireless communication method according to an embodiment of this application.
FIG. 15 is a schematic interaction diagram of a wireless communication method according to an embodiment of this application.
FIG. 16 is a schematic interaction diagram of a wireless communication method according to another embodiment of this application.
FIG. 17 is a schematic block diagram of a network device according to an embodiment of this application.
FIG. 18 is a schematic block diagram of a terminal device according to an embodiment of this application.
FIG. 19 is a schematic block diagram of another network device according to an embodiment of this application.
FIG. 20 is a schematic block diagram of another terminal device according to an embodiment of this application.
FIG. 21 is a schematic block diagram of still another network device according to an embodiment of this application.
FIG. 22 is a schematic block diagram of still another terminal device according to an embodiment of this application.
FIG. 23 is a schematic block diagram of a terminal device according to an embodiment of this application.
FIG. 24 is a schematic block diagram of a communications device according to an embodiment of this application.
FIG. 25 is a schematic block diagram of a chip according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

Technical solutions in embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolution system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunication System, UMTS), a wireless local area network (Wireless Local Area Networks, WLAN), wireless fidelity (Wireless Fidelity, WiFi), a 5th generation (5th-Generation, 5G) communications system, or another communications system.

Generally, conventional communications systems support a limited quantity of connections and are easy to implement. With the development of communication technologies, mobile communications systems will not only support conventional communication, but will also support, for example, device-to-device (Device to Device, D2D) communication, machine-to-machine (Machine to Machine, M2M) communication, machine-type communication (Machine Type Communication, MTC), vehicle-to-vehicle (Vehicle to Vehicle, V2V) communication, or vehicle-to-everything (Vehicle to everything, V2X) communication. Embodiments of this application may also be applied to these communications systems.

Optionally, the communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, the communications system in embodiments of this application may be applied to an unlicensed spectrum, where the unlicensed spectrum may be considered as a shared spectrum; or the communications system in embodiment of this application may be applied to a licensed spectrum, where the licensed spectrum may be considered as a non-shared spectrum.

Embodiments of this application are described with reference to a network device and a terminal device. The terminal device may also be referred to as a user equipment (User Equipment, UE), an access terminal, a user unit, a user station, a mobile site, a mobile station, a distant station, a remote terminal, a mobile device, a user terminal, a terminal, a wireless communications device, a user proxy, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or any other processing device connected to a wireless modem, a vehicle-mounted device, a wearable device, a terminal device in a next generation communications system such as an NR network or a future evolved public land mobile network (Public Land Mobile Network, PLMN), or the like.

In embodiments of this application, the terminal device may be deployed on land, for example, including an indoor or outdoor device, a handheld device, a wearable device, or a vehicle-mounted device; may be deployed on water (for example, on a ship); or may be deployed in the air (for example, on an airplane, a balloon, and a satellite).

In this embodiment of this application, the terminal device may be a mobile phone (Mobile Phone), a tablet computer (Pad), a computer with wireless sending and receiving functions, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home).

As an example instead of a limitation, in embodiments of this application, the terminal device may alternatively be a wearable device. The wearable device may also be referred to as a wearable smart device, and is a general term for wearable devices such as glasses, gloves, watches, clothes, and shoes that are intelligently designed and developed by applying wearable technologies to daily wearing. The wearable device is a portable device that is directly worn on a body or integrated into clothes or an accessory of a user. In addition to being a hardware device, the wearable device can also realize various functions through software support, data exchange, and cloud interaction. In a broad sense, wearable smart devices may include a full-featured and large-sized device that can provide full or partial functions without relying on a smartphone, for example, a smart watch or smart glasses; and a device that only focuses on a specific type of application function and needs to cooperate with another device such as a smartphone for use, for example, various smart bracelets and smart jewelries for physical sign monitoring.

In embodiments of this application, the network device may be a device for communicating with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (Evolutional NodeB, eNB or eNodeB) in LTE, a relay station or an access point, a vehicle-mounted device, a wearable device, a network device (gNB) in an NR network, a network device in a future evolved PLMN network, a network device in an NTN network, or the like.

As an example instead of a limitation, in embodiments of this application, the network device may have a mobile feature, for example, the network device may be a movable device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. Optionally, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (Small cell). The small cell herein may include: a metro cell (Metro cell), a micro cell (Micro cell), a pico cell (Pico cell), a femto cell (Femto cell), or the like. These small cells have features of a small coverage range and low transmit power, and are suitable for providing a high-rate data transmission service.

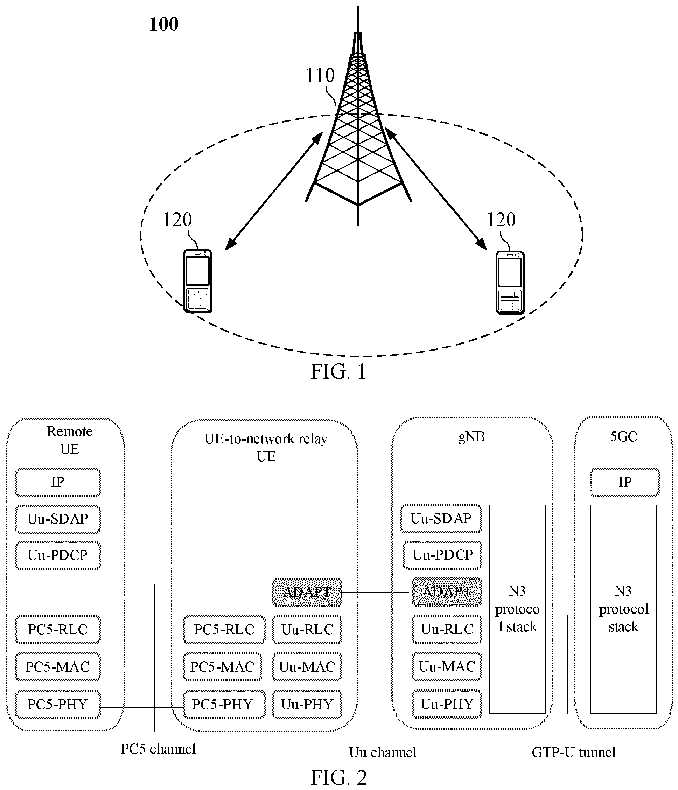

For example, a communications system 100 to which an embodiment of this application is applied is shown in FIG. 1. The communications system 100 may include a network device 110, and the network device 110 may be a device that communicates with a terminal device 120 (or referred to as a communications terminal or a terminal). The network device 110 may provide communication coverage for a specific geographic region, and may communicate with a terminal device within the coverage region.

FIG. 1 exemplarily shows one network device and two terminal devices. Optionally, the communications system 100 may include a plurality of network devices, and another quantity of terminal devices may be included in a coverage range of each network device. This is not limited in embodiments of this application.

Optionally, the communications system 100 may further include another network entity such as a network controller or a mobility management entity. This is not limited in embodiments of this application.

It should be understood that a device having a communication function in a network/system in embodiments of this application may be referred to as a communications device. The communications system 100 shown in FIG. 1 is used as an example. A communications device may include a network device 110 and a terminal device 120 having a communication function, and the network device 110 and the terminal device 120 may be specific devices described above. Details are not described herein again. The communications device may further include other devices in the communications system 100, such as a network controller, a mobility management entity, and other network entities. This is not limited in embodiments of this application.

It should be understood that the terms "system" and "network" in this specification may often be used interchangeably in this specification. The term "and/or" in this specification describes merely an association for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, "indicate" mentioned in embodiments of this application may mean a direct indication, or may mean an indirect indication, or may mean that there is an association. For example, if A indicates B, it may mean that A directly indicates B, for example, B can be obtained based on A. Alternatively, it may mean that A indirectly indicates B, for example, A indicates C, and B can be obtained based on C. Alternatively, it may mean that there is an association between A and B.

In description of embodiments of this application, the term "corresponding" may mean that there is a direct or indirect correspondence between the two, or may mean that there is an association between the two, or may mean that there is a relationship such as indicating and being indicated, or configuring and being configured.

In embodiments of this application, "predefining" can be implemented by prestoring corresponding code or a corresponding table in a device (for example, including a terminal device and a network device) or in other manners that can be used for indicating related information. A specific implementation thereof is not limited in this application. For example, predefining may indicate being defined in a protocol.

In embodiments of this application, the "protocol" may indicate a standard protocol in the communication field, which may include, for example, an LTE protocol, an NR protocol, and a related protocol applied to a future communications system. This is not limited in this application.

In some scenarios, a UE-to-network (UE-to-Network) relay (Relay) UE based on a layer-2 is introduced. The UE-to-Network relay UE may be directly connected to a network. Specifically, a remote terminal is connected to an access network (for example, a gNB) and a core network (Core Network, CN) (for example, a 5GC) by using the UE-to-Network relay UE.

FIG. 2 is a schematic diagram of a transport protocol stack in a 5G system. The transport protocol stack is specifically related to a remote UE (Remote UE), a layer 2 UE-to-Network relay UE, a gNB, and a 5GC. As shown in FIG. 2, the remote UE may include the following layers: Internet protocol (Internet Protocol, IP), Uu-service data adaptation protocol (Service Data Adaptation Protocol, SDAP), Uu-packet data convergence protocol (Packet Data Convergence Protocol, PDCP), PC5-radio link control (Radio Link Control, RLC), PC5-media access control (Media Access Control, MAC), and PC5-physical (Physics, PHY). The UE-to-Network relay UE may include the following layers: adaptation (ADAPT), PC5-RLC, PC5-MAC, PC5-PHY, Uu-RLC, Uu-MAC, and Uu-PHY. The gNB may include the following layers: Uu-SDAP, Uu-PDCP, ADAPT, Uu-RLC, Uu-MAC, Uu-PHY, and N3 protocol stack. The 5GC may include the following layers: IP and N3 protocol stack.

As shown in FIG. 2, the adaptation (ADAPT) layer of the relay UE is set above a control plane and a user plane RLC layer of a Uu interface between the relay UE and the gNB. Uu-SDAP, Uu-PDCP, and radio resource control (Radio Resource Control, RRC) end between the remote UE and the gNB; and RLC, MAC, and PHY end in each link (including a link between the remote UE and the relay UE, and a link between the relay UE and the gNB).

In some embodiments, a link between the relay UE and the network may be referred to as a Uu link or a Uu path, a direct link between the remote UE and the network may also be referred to as a Uu link or a Uu path, and a link between the remote UE and the relay UE may be referred to as a PC5 link or a PC5 path.

For an uplink of the L2 UE-to-Network relay UE:

The adaptation layer of the relay UE supports uplink bearer mapping between access PC5 RLC channels, and is used to support transmission on the Uu path between the relay UE and the network and is connected to the Uu channel. For a relay service of an uplink, different end-to-end bearers (for example, signalling radio bearers (signaling radio bearers, SRB), or data radio bearers (Data Radio Bearer, DRB)) of a same remote UE and/or different remote UEs can support N:1 mapping and data multiplexing on one Uu RLC channel.

The adaptation layer of the relay UE includes identity information of a remote terminal of a to-be-relayed uplink service and identity information of a radio bearer of the remote terminal, so that the gNB associates received data packets of a packet data convergence protocol (Packet Data Convergence Protocol, PDCP) entity associated with the radio bearer of the remote terminal.

For a downlink of the L2 UE-to-Network relay UE:

The adaptation layer of the relay UE may be used to support downlink bearer mapping at the gNB to map an end-to-end radio bearer (for example, an SRB or a DRB) of the remote terminal to a Uu RLC channel through a Uu path between the relay UE and the network. The adaptation layer of the relay UE may be used to support downlink N:1 bearer mapping and data multiplexing between a plurality of end-to-end radio bearers (for example, SRBs or DRBs) of the remote UE and/or different remote UEs and the Uu RLC channel on the Uu path between the relay UE and the network.

The adaptation layer of the relay UE includes identity information of a remote terminal of a to-be-relayed downlink service. The identity information of the radio bearer of the remote terminal and the identity information of the remote terminal need to be placed in the adaptation layer of the relay UE by using the gNB, so that the relay UE maps a data packet received over the radio bearer of the remote terminal to a PC5 RLC channel related to the radio bearer.

In some scenarios, the remote UE may be connected to the network through a plurality of paths. For example, the plurality of paths include a direct-connection path between the remote UE and the network, and a relay path connected to the network through the relay UE.

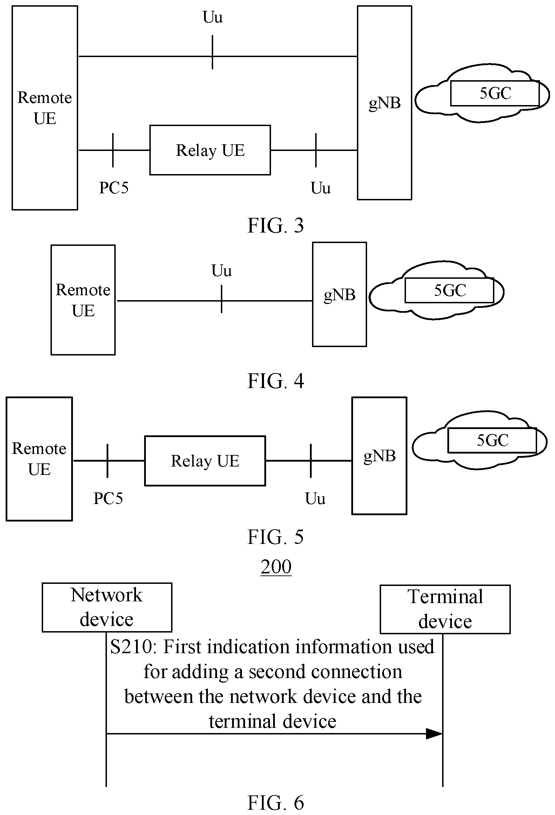

For example, as shown in FIG. 3, the remote UE may be connected to a network device through the relay UE, and directly connected to the network device through a Uu interface. A connection and communication are implemented between the remote UE and the relay UE by using a PC5 interface, and a connection and communication are implemented between the relay UE and the network device by using the Uu interface. In some scenarios, if there are a plurality of hops of relay UEs, a connection and communication are implemented between the relay UEs by using a PC5 interface, and a connection and communication are implemented between a last relay UE and the network device by using a Uu interface.

In some other scenarios, the remote UE may be connected to the network through one path. For example, as shown in FIG. 4, the remote UE is connected to the network through a direct connection path between the remote UE and the network; or as shown in FIG. 5, the remote UE is connected to the network through the relay UE.

Therefore, how to switch to be connected to the network through a plurality of paths when the remote UE is connected to the network through one path and how to switch to be connected to the network through one path when the remote UE is connected to the network through a plurality of paths are urgent problems to be resolved.

For ease of understanding of the technical solutions in embodiments of this application, the technical solutions of this application are described in detail below by using specific embodiments. The foregoing related technologies, as optional solutions, may be randomly combined with the technical solutions in embodiments of this application, all of which fall within the protection scope of embodiments of this application. Embodiments of this application include at least part of the following content.

FIG. 6 is a schematic interaction diagram of a wireless communication method 200 according to an embodiment of this application. A first connection is established between a terminal device and a network device. As shown in FIG. 6, the method 200 may include at least step S210.

In step S210, the network device sends first indication information to the terminal device, where the first indication information is used for adding a second connection between the terminal device and the network device.

In some embodiments, the terminal device may be a remote terminal or an anchor terminal (anchor UE).

In some embodiments, the first connection is an established connection between the terminal device and the network device, and the second connection is a to-be-added connection or a to-be-established connection.

Therefore, in this embodiment of this application, the network device may add the second connection between the terminal device and the network device based on the first indication information, to switch from a single connection to a plurality of connections between the terminal device and the network device.

It should be noted that this embodiment of this application may be applied to switching (or conversion) from a single connection to a plurality of connections, or may be applied to switching from a plurality of connections to more connections, for example, switching from a single connection to dual connections, or switching from dual connections to three connections (for example, including one direct connection and two indirect connections).

It should be further noted that in this embodiment of this application, the connection may be replaced with a path, a link, an interface, or the like. For example, the single connection may be expressed as a single path or a single link; the plurality of paths may be expressed as a plurality of paths or a plurality of links; the direct connection may be expressed as a direct path, a direct link, a Uu link, or a Uu path; and the indirect connection may be expressed as a relay connection, a relay path, an indirect path, an indirect link, a PC5 link, a PC5 path, or a PC5 connection.

In some embodiments, whether to add (or establish) the second connection between the terminal device and the network device may be determined by the network device, or may be determined by the terminal device.

For example, the network device independently sends the first indication information to the terminal device, where the first indication information is used for adding the second connection.

For another example, the network device may send the first indication information to the network device in response to a request of the terminal device, where the first indication information is used for adding the second connection.

In some embodiments, the first connection is a direct connection between the terminal device and the network device.

For example, a connection before switching between the terminal device and the network device may be shown in FIG. 4.

In some other embodiments, the first connection may be an indirect connection between the terminal device and the network device. For example, a connection before switching between the terminal device and the network device may be shown in FIG. 5.

In some embodiments, the second connection is an indirect connection between the terminal device and the network device.

In some other embodiments, the second connection is a direct connection between the terminal device and the network device.

In some embodiments, the indirect connection may include a PC5 connection between the terminal device and a relay terminal and a Uu connection between the relay terminal and the network device.

Case 1: the first connection is a direct connection, and the second connection is an indirect connection.

In other words, the established connection is a direct connection, and the to-be-added connection is an indirect connection.

To be specific, the terminal device is switched from a mode of communicating with the network device by using the direct connection only, to another mode of communicating with the network device by using the direct connection and the indirect connection.

Optionally, in Case 1, the second connection may include one indirect connection, or may include a plurality of indirect connections, where each indirect connection corresponds to one relay terminal.

Optionally, the relay terminal may be a layer 2 relay, or may be a layer 3 relay. This is not limited in this application.

Case 2: the first connection is an indirect connection, and the second connection is a direct connection.

In other words, the established connection is an indirect connection, and the to-be-added connection is a direct connection.

To be specific, the terminal device is switched from a mode of communicating with the network device by using the indirect connection only, to another mode of communicating with the network device by using the direct connection and the indirect connection.

It should be understood that the first indication information may be carried by using any downlink information or downlink signalling, for example, RRC signalling or a MAC CE. This is not limited in this application.

In some embodiments, the first indication information is carried by using sidelink configuration dedicated information.

As an example instead of a limitation, the sidelink configuration dedicated information may include a sidelink configuration dedicated new radio (SL-ConfigDedicatedNR) information element (Information Element, IE).

In some embodiments, the first indication information is used to indicate configuration information related to the second connection.

As an example instead of a limitation, the first indication information is used to indicate at least one of the following information:
frequency information, resource information, RLC channel configuration information, or adaptation layer configuration information that is related to the second connection.

In other words, the configuration information related to the second connection may include at least one of: the frequency information, the resource information, the RLC channel configuration information, or the adaptation layer configuration information that is related to the second connection.

In some embodiments, after the second connection is established, the terminal device may perform sidelink control and/or data channel transmission and reception based on the frequency information related to the second connection.

In some embodiments, the terminal device may perform data transmission based on the resource information related to the second connection.

In some embodiments, the terminal device may establish an RLC channel on the second connection based on the RLC channel configuration information related to the second connection.

In some embodiments, the terminal device may establish an adaptation layer entity on the second connection based on the adaptation layer configuration information related to the second connection.

It should be understood that, in this embodiment of this application, in a case that the second connection is added, a home cell or a primary cell of the terminal device may be handed over, or a home cell or a primary cell of the terminal device may be not be handed over.

For example, in a case that the second connection is added, or in a handover process, the home cell or the primary cell of the terminal device may be handed over from the first connection to the second connection, or may remain on the first connection.

In some embodiments of this application, the method 200 further includes:
sending, by the network device, second indication information to the terminal device, where the second indication information is used for handing over the home cell or the primary cell (PCell) of the terminal device from the first connection to the second connection.

For example, in a case that a connection status between the terminal device and the network device changes, the network device may change an association between the connection and the home cell or the primary cell of the terminal device. For example, the home cell or the primary cell of the terminal device is handed over from an established connection to a newly added connection.

In some embodiments, the process of handing over the home cell or the primary cell (PCell) of the terminal device from the first connection to the second connection may include:
handing over the home cell or the primary cell of the terminal device from a carrier on the first connection to a carrier on the second connection; or
handing over the home cell or the primary cell of the terminal device from a cell corresponding to a carrier on the first connection to a cell corresponding to a carrier on the second connection.

It should be understood that the second indication information may be carried by using any downlink information or downlink signalling, for example, RRC signalling or a MAC CE. This is not limited in this application.

In some embodiments, the first indication information and the second indication information may be carried by using same downlink information or downlink signalling, or may be carried by using different downlink information or downlink signalling. This is not limited in this application.

In some embodiments, the second indication information may be understood as handover-related information, and the second indication information may be carried in an IE that is used to carry the handover-related information. For example, the second indication information is carried by using a reconfiguration with sync (ReconfigurationWithSync) IE.

In some other embodiments, the second indication information may be not carried by using a Reconfiguration WithSync IE.

In other words, the Reconfiguration WithSync IE may include the second indication information, or may not include the second indication information.

In some embodiments of this application, the method 200 further includes:
sending, by the network device, third indication information to the terminal device, where the third indication information is used for configuring, as a secondary cell, a cell corresponding to a frequency on the first connection.

It should be understood that the third indication information may be carried by using any downlink information or downlink signalling, for example, RRC signalling or a MAC CE. This is not limited in this application.

In some embodiments, the third indication information, the second indication information, and the first indication information may be carried by using same downlink information or downlink signalling, or may be carried by using different downlink information or downlink signalling. This is not limited in this application.

In some embodiments, in a case that the home cell or the primary cell of the terminal device changes (or the second indication information is sent), the network device sends the third indication information to the terminal device.

In some embodiments of this application, the method 200 further includes:
sending, by the network device, fourth indication information to the terminal device, where the fourth indication information is used for determining an association between a bearer between the terminal device and the network device and a connection between the terminal device and the network device.

Optionally, the fourth indication information may be used to indicate a status of a change of the association between the bearer and the connection.

As an example instead of a limitation, the fourth indication information is used to indicate at least one of the following:
that a first bearer between the terminal device and the network device is associated with an RLC entity and/or an adaptation (adaptation) layer entity on the first connection;
that a first bearer between the terminal device and the network device is not associated with an RLC entity and/or an adaptation layer entity on the first connection;
that a second bearer between the terminal device and the network device is associated with an RLC entity and/or an adaptation layer entity on the second connection; or
that a second bearer between the terminal device and the network device is not associated with an RLC entity and/or an adaptation layer entity on the second connection.

Optionally, the first bearer and the second bearer may be a same bearer, or may be different bearers. This is not limited in this application.

Optionally, the first bearer and the second bearer may be established bearers, or may be newly established bearers. For example, a new bearer may be established for the added second connection. This is not limited in this application.

In some embodiments, if the fourth indication information does not indicate a mapping relationship between an established bearer and a connection, it may be understood that the mapping relationship between the established bearer and the connection does not change after the second connection is added.

In some embodiments, in a case that the home cell or the primary cell of the terminal device changes (or the second indication information is sent), the network device sends the fourth indication information to the terminal device, so that the terminal device determines, based on the fourth indication information, a bearer used for transmission by using the first connection and/or the second connection.

In some embodiments of this application, the method 200 further includes:
maintaining, by the network device, a home cell or a primary cell of the terminal device unchanged.

To be specific, in a case that a connection status between the terminal device and the network device changes, the network device may maintain an association between the connection and the home cell or the primary cell of the terminal device unchanged. In other words, the home cell or the primary cell of the terminal device is still on an established connection.

In some embodiments, the process of maintaining, by the network device, a home cell or a primary cell of the terminal device unchanged includes:
sending, by the network device, no Reconfiguration With Sync IE to the terminal device.

To be specific, the network device does not use a Reconfiguration With Sync IE, which means that the home cell or the primary cell of the terminal device remains unchanged.

In some embodiments of this application, the method 200 further includes:
maintaining, by the network device, the first connection occupied or reserving, by the network device, the first connection; and
correspondingly, maintaining, by the terminal device, the first connection occupied or reserving, by the terminal device, the first connection.

In some embodiments, the process of maintaining the first connection occupied or reserving the first connection may include:
maintaining the configuration information related to the first connection occupied, or reserving the configuration information related to the first connection.

In some embodiments, the process of maintaining the configuration information related to the first connection occupied or reserving the configuration information related to the first connection may include:
maintaining at least one of frequency information, resource information, RLC channel configuration information, or adaptation layer configuration information that is related to the first connection occupied, or reserving at least one of the above information.

In some embodiments of this application, the method 200 further includes:
sending, by the network device, identity information of a relay terminal to the terminal device.

For example, in a case that the second connection is an indirect connection, the network device may send the identity information of the relay terminal to the terminal device. Further, the terminal device may perform service transmission by using the relay terminal.

In some embodiments, the identity information of the relay terminal may be a physical layer identifier or a MAC layer identifier of the terminal device, or other identity information that can uniquely identify the relay terminal. This is not limited in this application.

For example, the identity information of the relay terminal may include at least one of the following:
media access control identity information MAC-ID, a radio network temporary identity (Radio Network Temporary Identity, RNTI), and a 5G-S-TSMI.

In some embodiments, the RNTI may include at least one of the following:
a cell radio network temporary identity (Cell RNTI, C-RNTI), or an inactive (Inactive) radio network temporary identity I-RNTI.

In some embodiments, the identity information of the relay terminal and the foregoing indication information may be carried by using same downlink information or downlink signalling, or may be carried by using different downlink information or downlink signalling. This is not limited in this application.

In some embodiments, the identity information of the relay terminal may be understood as handover-related information, and the identity information of the relay terminal may be carried in an IE that is used to carry the handover-related information. For example, the identity information of the relay terminal is carried by using a reconfiguration with sync (Reconfiguration WithSync) IE.

In some other embodiments, the identity information of the relay terminal may be not carried by using a Reconfiguration WithSync IE.

In other words, the Reconfiguration With Sync IE may include the identity information of the relay terminal, or may not include the identity information of the relay terminal.

In some embodiments of this application, the method 200 further includes:
sending, by the network device, counter-related information to the terminal device.

In some embodiments, the timer-related information may be used for controlling establishing of the second connection.

In some embodiments, the counter-related information may include duration information of a counter.

Optionally, the counter starts when establishing of the second connection starts.

Optionally, in a case that establishing of the second connection is completed, the timer stops.

Optionally, if the timer expires, the second connection fails to be established.

In some embodiments, the counter-related information may be understood as handover-related information, and the counter-related information may be carried in an IE that is used to carry the handover-related information. For example, the counter-related information is carried by using a Reconfiguration WithSync IE.

In some other embodiments, the counter-related information may be not carried by using a Reconfiguration WithSync IE.

In other words, the ReconfigurationWithSync IE may include the counter-related information, or may not include the counter-related information.

In some embodiments of this application, the method 200 further includes:
sending, by the network device, fifth indication information to the terminal device, where the fifth indication information is used to indicate at least one of the following operations:
reserving an access layer configuration on the direct connection; or
establishing an access layer configuration on the indirect connection.

For example, in a case that the second connection is an indirect connection, the network device may send the fifth indication information to the terminal device.

In some embodiments of this application, the method 200 further includes:
sending, by the network device, sixth indication information to the terminal device, where the sixth indication information is used to indicate at least one of the following operations:
establishing an access layer configuration on the direct connection; or
reserving an access layer configuration on the indirect connection.

For example, in a case that the second connection is a direct connection, the network device may send the sixth indication information to the terminal device.

In some embodiments, the access layer configuration on the direct connection includes but is not limited to at least one of the following:
an RLC channel or a cell-related configuration on the direct connection.

In some embodiments, the access layer configuration on the indirect connection includes but is not limited to at least one of the following:
an RLC channel, an adaptation layer entity, or a frequency-related configuration on the indirect connection.

To be specific, when the second connection is added, a protocol layer entity, an established RLC channel, a cell-related configuration, or the like on the first connection may be reserved, and/or a protocol layer entity (for example, the adaptation layer entity), an RLC channel, or a cell-related configuration on the second connection may be established.

The following describes this embodiment of this application from a perspective of device interaction with reference to Embodiment 1 and Embodiment 2. The remote terminal may correspond to the terminal device above.

Embodiment 1: The first connection is a direct connection, and the second connection is an indirect connection.

For example, a connection between before handover the terminal device and the network device may be shown in FIG. 4; and a connection after handover between the terminal device and the network device may be shown in FIG. 3.

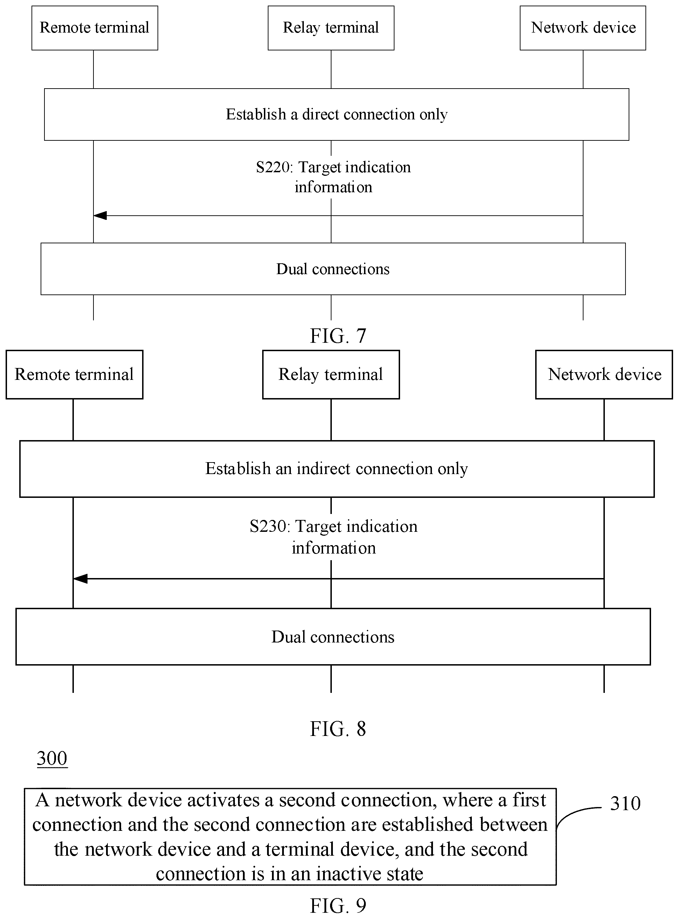

As shown in FIG. 7, the following step S220 may be included.

In step S220, the network device sends target indication information to the remote terminal.

Optionally, the target indication information may include at least one of: first indication information, second indication information, third indication information, fourth indication information, fifth indication information, or sixth indication information.

In some embodiments, the network device may add an indirect connection by using the first indication information.

In some embodiments, the first indication information may indicate at least one of the following information:
frequency information, resource information, RLC channel configuration information, or adaptation layer configuration information that is related to the indirect connection.

In some embodiments, the first indication information is carried by using an SL-ConfigDedicatedNR IE.

In some embodiments, the target indication information may further indicate the identity information of the relay terminal and/or the counter-related information.

For example, the identity information of the relay terminal and/or the counter-related information is carried by using a ReconfigurationWithSync IE.

In some embodiments, the network device hands over, by using the second indication information, the home cell or the primary cell (PCell) of the terminal device from a direct connection to an indirect connection.

For example, the home cell or the primary cell of the terminal device is handed over from a carrier (or referred to as a direct carrier) on the direct connection to a carrier (or referred to as an indirect connection or a PC5 carrier) on the indirect connection.

In some embodiments, the second indication information is carried by using a ReconfigurationWithSync IE.

For example, in a handover process, the network device uses the Reconfiguration With Sync IE to carry the second indication information to instruct to perform handover of the home cell or the primary cell of the terminal device.

In some embodiments, the network device may configure, as a secondary cell by using the third indication information, a cell corresponding to a frequency on the direct connection.

In some embodiments, the network device may indicate, by using the fourth indication information, the association between the bearer between the terminal device and the network device and the connection between the terminal device and the network device.

In some embodiments, by using the fifth indication information, the network device may reserve the RLC channel and/or the cell-related configuration on the direct connection, and/or establish the RLC channel and/or the adaptation layer entity and/or the cell-related configuration on the indirect connection.

In some other embodiments, the network device may alternatively maintain the home cell or the primary cell (PCell) of the terminal device unchanged. In other words, the home cell or the primary cell (PCell) of the terminal device is still on the direct connection.

For example, in a handover process, the network device does not use a Reconfiguration With Sync IE, which means that the home cell or the primary cell of the terminal device remains unchanged.

Embodiment 2: The first connection is an indirect connection, and the second connection is a direct connection.

For example, a connection before handover between the terminal device and the network device may be shown in FIG. 5; and a connection after handover between the terminal device and the network device may be shown in FIG. 3.

As shown in FIG. 8, the method may include the following step S203.

In step S230, the network device sends target indication information to the remote terminal.

Optionally, the target indication information may include at least one of: first indication information, second indication information, third indication information, fourth indication information, fifth indication information, or sixth indication information.

In some embodiments, the network device may add a direct connection by using the first indication information.

In some embodiments, the first indication information may indicate at least one of the following information:
frequency information, resource information, RLC channel configuration information, or adaptation layer configuration information that is related to the direct connection.

In some embodiments, the first indication information is carried by using an SL-ConfigDedicatedNR IE.

In some embodiments, the network device hands over, by using the second indication information, the home cell or the primary cell (PCell) of the terminal device from an indirect connection to a direct connection.

For example, the home cell or the primary cell of the terminal device is handed over from a carrier on the indirect connection to a carrier on the direct connection.

In some embodiments, the second indication information is carried by using a ReconfigurationWithSync IE.

For example, in a handover process, the network device uses the Reconfiguration With Sync IE to carry the second indication information to instruct to perform handover of the home cell or the primary cell of the terminal device.

In some embodiments, the network device may configure, as a secondary cell by using the third indication information, a cell corresponding to a frequency on the indirect connection.

In some embodiments, the network device may indicate, by using the fourth indication information, the association between the bearer between the terminal device and the network device and the connection between the terminal device and the network device.

In some embodiments, by using the sixth indication information, the network device may reserve the RLC channel and/or the adaptation layer entity and/or the cell-related configuration on the indirect connection, and/or establish the RLC channel and/or the cell-related configuration on the direct connection.

In some other embodiments, the network device maintains the home cell or the primary cell (PCell) of the terminal device unchanged.

In other words, the home cell or the primary cell (PCell) of the terminal device is still on the indirect connection.

For example, in a handover process, the network device does not use a Reconfiguration With Sync IE, which means that the home cell or the primary cell of the terminal device remains unchanged.

In conclusion, in this embodiment of this application, in a case that the first connection is established between the terminal device and the network device, the second connection may be added between the network device and the terminal device through information exchange, thereby switching from a single connection to a plurality of connections between the terminal device and the network device.

For example, the network device may indicate, by using the first indication information, the configuration information related to the second connection.

For another example, by using the second indication information, the network device may hand over the home cell or the primary cell of the terminal device, or may not hand over the home cell or the primary cell of the terminal device.

For another example, the network device configures, as the secondary cell by using the third indication information, the cell corresponding to the frequency on the first connection.

For another example, the network device may indicate, by using the fourth indication information, the association between the bearer between the terminal device and the network device and the connection between the terminal device and the network device.

For another example, by using indication information, the network device reserves an access layer configuration on the first connection and/or establishes an access layer configuration on the second connection.

FIG. 9 is a schematic diagram of a wireless communication method 300 according to an embodiment of this application. The method may be performed by the network device in the communications system 100 shown in FIG. 1. A first connection and a second connection are established between the network device and a terminal device. The second connection is in an inactive state or a sleep state.

As shown in FIG. 9, the method 300 may include at least step S310.

In step S310, the network device activates the second connection.

In some embodiments, the terminal device may be a remote terminal or an anchor terminal (anchor UE).

In some embodiments, the first connection and the second connection are established connections between the terminal device and the network device.

In some embodiments, the first connection is in an active state.

In some embodiments, the first connection being in the active state may include that configuration information related to the first connection is in an active state.

In some embodiments, the second connection being in the inactive state may include that configuration information related to the second connection is in an inactive state.

In some embodiments, the configuration information related to the first connection may include at least one of the following:
frequency information, resource information, RLC channel configuration information, or adaptation layer configuration information that is related to the first connection.

In some embodiments, the configuration information related to the second connection may include at least one of the following:
frequency information, resource information, RLC channel configuration information, or adaptation layer configuration information that is related to the second connection.

For example, in a case that the second connection is in the inactive state, the terminal device may not transmit and receive control and/or data channel transmission and reception on a frequency that is related to the second connection.

For another example, in a case that the second connection is in the inactive state, the terminal device may not perform data transmission on a resource that is related to the second connection.

In some embodiments, whether to activate the second connection may be determined by the network device, or may be determined by the terminal device.

For example, the network device independently determines to activate the second connection.

For another example, the network device may activate the second connection in response to a request of the terminal device.

In some embodiments, the first connection is a direct connection between the terminal device and the network device.

In some other embodiments, the first connection is an indirect connection between the terminal device and the network device.

In some embodiments, the second connection is an indirect connection between the terminal device and the network device.

In some other embodiments, the second connection is a direct connection between the terminal device and the network device.

In some embodiments, the indirect connection may include a PC5 connection between the terminal device and a relay terminal and a Uu connection between the relay terminal and the network device.

It should be noted that this embodiment of this application may be applied to switching (or conversion) from a single connection to a plurality of connections, or may be applied to switching from a plurality of connections to more connections, for example, switching from a single connection to dual connections, or switching from dual connections to three connections (for example, including one direct connection and two indirect connections).

It should be further noted that in this embodiment of this application, the connection may also be replaced with a path, a link, an interface, or the like. For example, the single connection may also be expressed as a single path or a single link; the plurality of paths may also be expressed as a plurality of paths or a plurality of links; the direct connection may also be expressed as a direct path, a direct link, a Uu link, or a Uu path; and the indirect connection may also be expressed as a relay connection, a relay path, an indirect path, an indirect link, a PC5 link, a PC5 path, or a PC5 connection.

Case 1: the first connection is a direct connection, and the second connection is an indirect connection.

In other words, before handover, an active connection is a direct connection, and an inactive connection is an indirect connection.

To be specific, the terminal device is switched from a mode of communicating with the network device by using the direct connection only, to another mode of communicating with the network device by using the direct connection and the indirect connection.

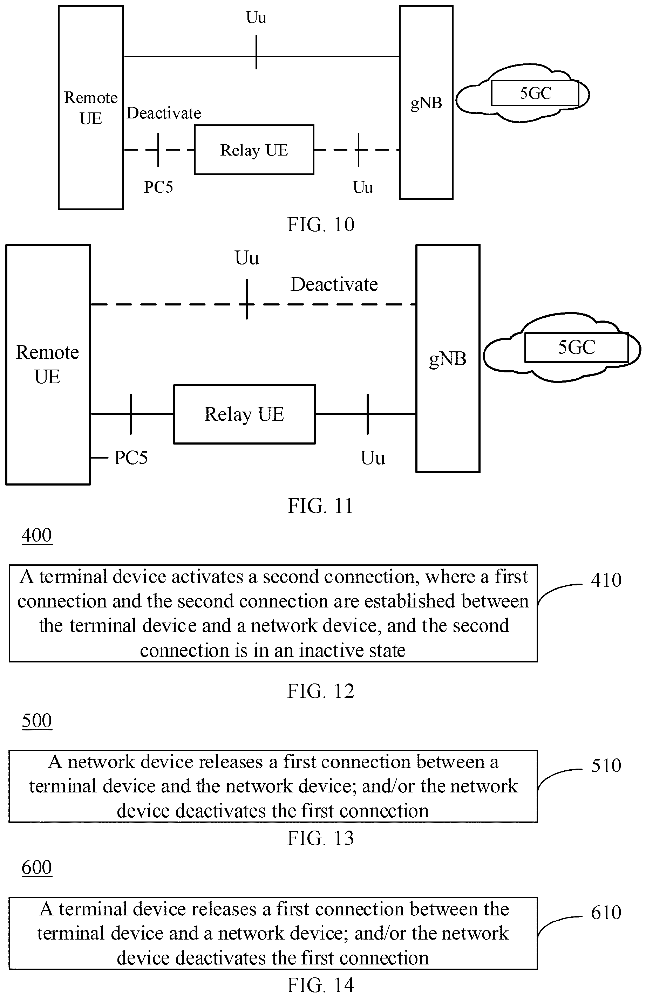

For example, a connection before handover between the terminal device and the network device may be shown in FIG. 3; an, a connection after handover between the terminal device and the network device may be shown in FIG. 10.

Optionally, in Case 1, the second connection may include one indirect connection, or may include a plurality of indirect connections, where each indirect connection corresponds to one relay terminal.

Optionally, the relay terminal may be a layer 2 relay, or may be a layer 3 relay. This is not limited in this application.

Case 2: the first connection is an indirect connection, and the second connection is a direct connection.

In other words, before handover, an active connection is an indirect connection, and an inactive connection is a direct connection.

To be specific, the terminal device is switched from a mode of communicating with the network device by using the indirect connection only, to another mode of communicating with the network device by using the direct connection and the indirect connection.

For example, a connection before handover between the terminal device and the network device may be shown in FIG. 3; and a connection after handover between the terminal device and the network device may be shown in FIG. 11.

In some embodiments, the process of activating, by the network device, the second connection includes:
activating, by the network device, the configuration information related to the second connection.

In some embodiments, the process of activating, by the network device, the second connection includes:
sending, by the network device, seventh indication information to the terminal device, where the seventh indication information is used for activating the second connection.

It should be understood that the seventh indication information may be carried by using any downlink information or downlink signalling. This is not limited in this application.

In some embodiments, the seventh indication information is used for activating at least one of the frequency information, the resource information, the radio link control RLC channel configuration information, or the adaptation layer configuration information that is related to the second connection.

For example, in a case that the second connection is an indirect connection, the seventh indication information is used for activating at least one of the frequency information, the resource information, the radio link control RLC channel configuration information, or the adaptation layer configuration information that is related to the second connection.

For another example, in a case that the second connection is a direct connection, the seventh indication information is used for activating at least one of the frequency information, the resource information, or the RLC channel configuration information that is related to the second connection.

In some embodiments, the seventh indication information is carried by using RRC signalling and/or a MAC CE.

Therefore, in this embodiment of this application, a connection status between the terminal device and the network device is switched from a single connection to a plurality of connections through activating a connection in an inactive state.

FIG. 12 is a schematic diagram of a wireless communication method 400 according to an embodiment of this application. The method may be performed by the terminal device in the communications system 100 shown in FIG. 1. A first connection and a second connection are established between the terminal device and a network device. The second connection is in an inactive state or a sleep state.

As shown in FIG. 12, the method 400 may include at least step S410.

In step S410, the terminal device activates the second connection.

In some embodiments, the terminal device may be a remote terminal or an anchor terminal (anchor UE).

In some embodiments, the first connection and the second connection are established connections between the terminal device and the network device.

In some embodiments, the first connection is in an active state.

In some embodiments, the first connection being in the active state may include that configuration information related to the first connection is in an active state.

In some embodiments, the second connection being in the inactive state may include that configuration information related to the second connection is in an inactive state.

In some embodiments, the configuration information related to the first connection may include at least one of the following:
frequency information, resource information, RLC channel configuration information, or adaptation layer configuration information that is related to the first connection.

In some embodiments, the configuration information related to the second connection may include at least one of the following:
frequency information, resource information, RLC channel configuration information, or adaptation layer configuration information that is related to the second connection.

For example, in a case that the second connection is in the inactive state, the terminal device may not transmit and receive sidelink control and/or data channel on a frequency related to the second connection.

For another example, in a case that the second connection is in the inactive state, the terminal device may not perform data transmission on a resource related to the second connection.

In some embodiments, whether to activate the second connection may be performed in response to an instruction of the network device, or may be determined by the terminal device.

For example, the terminal device independently determines to activate the second connection.

For another example, the terminal device may activate the second connection according to the instruction of the network device.

In some embodiments, the first connection is a direct connection between the terminal device and the network device.

In some other embodiments, the first connection is an indirect connection between the terminal device and the network device.

In some embodiments, the second connection is an indirect connection between the terminal device and the network device.

In some other embodiments, the second connection is a direct connection between the terminal device and the network device.

In some embodiments, the indirect connection may include a PC5 connection between the terminal device and a relay terminal and a Uu connection between the relay terminal and the network device.

Case 1: the first connection is a direct connection, and the second connection is an indirect connection.

In other words, before handover, an active connection is a direct connection, and an inactive connection is an indirect connection.

To be specific, the terminal device is switched from a mode of communicating with the network device by using the direct connection only, to another mode of communicating with the network device by using the direct connection and the indirect connection.

Optionally, in Case 1, the second connection may include one indirect connection, or may include a plurality of indirect connections, where each indirect connection corresponds to one relay terminal.

Optionally, the relay terminal may be a layer 2 relay, or may be a layer 3 relay. This is not limited in this application.

Case 2: The first connection is an indirect connection, and the second connection is a direct connection.

In other words, before handover, an active connection is an indirect connection, and an inactive connection is a direct connection.

To be specific, the terminal device is switched from a mode of communicating with the network device by using the indirect connection only, to another mode of communicating with the network device by using the direct connection and the indirect connection.

In some embodiments, the process of activating, by the terminal device, the second connection includes:
activating, by the terminal device, the configuration information related to the second connection.

In some embodiments, the process of activating, by the terminal device, the second connection includes:
receiving, by the terminal device, seventh indication information sent by the network device, where the seventh indication information is used for activating the second connection.

It should be understood that the seventh indication information may be carried by using any downlink information or downlink signalling. This is not limited in this application.

In some embodiments, the seventh indication information is used for activating at least one of the frequency information, the resource information, the radio link control RLC channel configuration information, or the adaptation layer configuration information that is related to the second connection.

For example, in a case that the second connection is an indirect connection, the seventh indication information is used for activating at least one of the frequency information, the resource information, the radio link control RLC channel configuration information, or the adaptation layer configuration information that is related to the second connection.

For another example, in a case that the second connection is a direct connection, the seventh indication information is used for activating at least one of the frequency information, the resource information, or the RLC channel configuration information that is related to the second connection.

In some embodiments, the seventh indication information is carried by using RRC signalling and/or a MAC CE.

Therefore, in this embodiment of this application, a connection status between the terminal device and the network device is switched from a single connection to a plurality of connections through activating a connection in an inactive state.

FIG. 13 is a schematic diagram of a wireless communication method 500 according to an embodiment of this application. The method may be performed by the network device in the communications system 100 shown in FIG. 1. A first connection and a second connection are established between the network device and a terminal device.

As shown in FIG. 13, the method 500 may include at least step S510.

In step S510, the network device releases the first connection between the terminal device and the network device; and/or
the network device deactivates the first connection.

In some embodiments, the terminal device may be a remote terminal or an anchor terminal (anchor UE).

In some embodiments, the first connection and the second connection may be established connections between the terminal device and the network device.

In some embodiments, the first connection is in an active state, and the second connection is in an active state.

In some embodiments, the first connection being in the active state may include that configuration information related to the first connection is in an active state.

In some embodiments, the second connection being in the active state may include that configuration information related to the second connection is in an active state.

In some embodiments, whether to release the first connection may be determined by the network device, or may be determined by the terminal device.

For example, the network device independently determines to release the first connection.

For another example, the network device may release the first connection in response to a request of the terminal device.

In some embodiments, whether to deactivate the first connection may be determined by the network device, or may be determined by the terminal device.

For example, the network device independently determines to deactivate the first connection.

For another example, the network device may deactivate the first connection in response to a request of the terminal device.

It should be noted that this embodiment of this application may be applied to switching from a plurality of connections to a single connection, or may be applied to switching from a plurality of connections to fewer connections, for example, switching from dual connections to a single connection, or switching from three connections (for example, including one direct connection and two indirect connections) to dual connections.

It should be further noted that in this embodiment of this application, the connection may also be replaced with a path, a link, an interface, or the like. For example, the single connection may also be expressed as a single path or a single link; the plurality of paths may also be expressed as a plurality of paths or a plurality of links; the direct connection may also be expressed as a direct path, a direct link, a Uu link, or a Uu path; and the indirect connection may also be expressed as a relay connection, a relay path, an indirect path, an indirect link, a PC5 link, a PC5 path, or a PC5 connection.

In some embodiments, the first connection is a direct connection between the terminal device and the network device.

In some other embodiments, the first connection is an indirect connection between the terminal device and the network device.

In other words, a to-be-released connection or a to-be-deactivated connection may be a direct connection or an indirect connection between the terminal device and the network device.

In some embodiments, the second connection is an indirect connection between the terminal device and the network device.

In some other embodiments, the second connection is a direct connection between the terminal device and the network device.

In some embodiments of this application, the process of releasing, by the network device, the first connection includes:
releasing, by the network device, the configuration information related to the first connection; and/or
releasing, by the network device, a primary cell on the first connection; and/or
handing over a home cell or a primary cell of the terminal device from the first connection to the second connection.

In some embodiments of this application, the process of releasing, by the network device, the first connection includes:
sending, by the network device, eighth indication information to the terminal device, where the eighth indication information is used for releasing the first connection between the terminal device and the network device.

In some embodiments, the eighth indication information is used to instruct to release the configuration information related to the first connection.

For example, the eighth indication information is used to instruct to release at least one of the frequency information, the resource information, the radio link control RLC channel configuration information, or the adaptation layer configuration information that is related to the first connection.

It should be understood that the eighth indication information may be carried by using any downlink information or downlink signalling, for example, RRC signalling or a MAC CE. This is not limited in this application.

In some embodiments, the eighth indication information is carried by using sidelink configuration dedicated information.

As an example instead of a limitation, the sidelink configuration dedicated information may include a sidelink configuration dedicated new radio (SL-ConfigDedicatedNR) information element (Information Element, IE).

In some embodiments, the network device may release the indirect connection between the terminal device and the network device by using an SL-ConfigDedicatedNR IE.

In some embodiments, the eighth indication information is carried by using a secondary cell to release list (sCellToReleaseList) IE and/or an RLC bearer to release list (rlc-BearerToReleaseList) IE.

In some embodiments, the network device may release the direct connection between the terminal device and the network device by using the sCellToReleaseList IE and/or the rlc-BearerToReleaseList IE.

In some other embodiments of this application, the process of releasing, by the network device, the first connection between the terminal device and the network device includes:
sending, by the network device, ninth indication information to the terminal device, where the ninth indication information is used for releasing a primary cell on the first connection.

In other words, the network device may release the first connection through releasing the primary cell or the home cell on the first connection.

It should be understood that the ninth indication information may be carried by using any downlink information or downlink signalling. This is not limited in this application.

As an example instead of a limitation, the ninth indication information is carried by using radio resource control RRC reconfiguration (RRCReconfiguration) signalling.

For example, the RRCReconfiguration message may include explicit indication information to instruct to release the primary cell or the home cell on the first connection.

In some embodiments of this application, the process of deactivating, by the network device, the first connection includes:
deactivating, by the network device, the configuration information related to the first connection.

In some embodiments, the network device sends tenth indication information to the terminal device, where the tenth indication information is used to instruct to deactivate the configuration information related to the first connection. For example, the tenth indication information is used to instruct to deactivate at least one of the frequency information, the resource information, the RLC channel configuration information, or the adaptation layer configuration information that is related to the first connection.

It should be understood that the tenth indication information may be carried by using any downlink information or downlink signalling. This is not limited in this application.

As an example instead of a limitation, the tenth indication information is carried by using RRC signalling and/or a MAC CE.

In some other embodiments of this application, the network device deactivates the first connection by deactivating a bandwidth part (BandWidth, BWP) corresponding to a frequency on the first connection.

For example, the network device may send eleventh indication information to the terminal device, where the eleventh indication information is used for deactivating a BWP at a first frequency, and the first frequency is a frequency related to the first connection.

It should be understood that, in this embodiment of this application, in a case that the first connection is released or the first connection is deactivated, the home cell or the primary cell of the terminal device may be handed over, or the home cell or the primary cell of the terminal device may be not handed over.

For example, in a case that the home cell or the primary cell of the terminal device is on the first connection, the home cell or the primary cell of the terminal device is handed over, or the home cell or the primary cell of the terminal device is not handed over.

For another example, in a case that the home cell or the primary cell of the terminal device is on the second connection, the home cell or the primary cell of the terminal device may be not handed over.

In some embodiments of this application, the method 500 further includes:
handing over, by the network device, a home cell or a primary cell of the terminal device from the first connection to the second connection.

In other words, in a case that the first connection is released or the first connection is deactivated, the network device may hand over the home cell or the primary cell of the terminal device from the first connection to the second connection. For example, the home cell or the primary cell of the terminal device is handed over from a carrier on the first connection to a carrier on the second connection, or the home cell or the primary cell of the terminal device is handed over from a cell corresponding to a carrier on the first connection to a cell corresponding to a carrier on the second connection.

For example, in a case that the home cell or the primary cell of the terminal device is on the first connection, the network device may hand over the home cell or the primary cell of the terminal device from the first connection to the second connection.

In some embodiments, the process of handing over, by the network device, a home cell or a primary cell of the terminal device from the first connection to the second connection includes:
sending, by the network device, twelfth indication information to the terminal device, where the twelfth indication information is used to instruct to hand over the home cell or the primary cell of the terminal device from the first connection to the second connection.

For example, the twelfth indication information is used to instruct to hand over the home cell or the primary cell of the terminal device from a carrier on the first connection to a carrier on the second connection, or hand over the home cell or the primary cell of the terminal device from a cell corresponding to a carrier on the first connection to a cell corresponding to a carrier on the second connection.

It should be understood that the twelfth indication information may be carried by using any downlink information or downlink signalling. This is not limited in this application.

In some embodiments, the twelfth indication information may be understood as handover-related information, and the twelfth indication information may be carried in an IE that is used to carry the handover-related information.

For example, the twelfth indication information is carried by using a reconfiguration with sync (Reconfiguration WithSync) IE.

It should be understood that, in this embodiment of this application, in a case of no contradiction, the foregoing indication information may be carried by using same downlink information or downlink signalling, or may be carried by using different downlink information or downlink signalling. This is not limited in this application.

In some embodiments of this application, the method 500 further includes:
maintaining, by the network device, a home cell or a primary cell of the terminal device unchanged.

In some embodiments, the process of maintaining, by the network device, a home cell or a primary cell of the terminal device unchanged includes:
sending, by the network device, no Reconfiguration With Sync IE to the terminal device.

In other words, in a case that a connection status between the terminal device and the network device changes, the network device may maintain an association between the connection and the home cell or the primary cell of the terminal device unchanged.

For example, in a case that the home cell or the primary cell of the terminal device is on the second connection, the network device may maintain the home cell or the primary cell of the terminal device unchanged.

In conclusion, in this embodiment of this application, in a case that the first connection and the second connection are established between the terminal device and the network device, the connection status between the terminal device and the network device is switched from a plurality of connections to a single connection through releasing or deactivating one of the first connection and the second connection.

For example, the network device instructs, by using the eighth indication information, to release the first connection.

For another example, the network device instructs, by using the ninth indication information, to release the primary cell on the first connection.

For another example, the network device instructs, by using the tenth indication information, to deactivate the first connection.

For another example, the network device instructs, by using the eleventh indication information, to deactivate the first connection by deactivating a BWP corresponding to a frequency on the first connection.

For another example, the network device instructs, by using the twelfth indication information, to hand over the home cell or the primary cell of the terminal device from the first connection to the second connection.

FIG. 14 is a schematic diagram of a wireless communication method 600 according to an embodiment of this application. The method may be performed by the terminal device in the communications system 100 shown in FIG. 1. A first connection and a second connection are established between the terminal device and a network device.

As shown in FIG. 14, the method 600 may include at least step S610.

In step S610, the terminal device releases the first connection between the terminal device and the network device; and/or
the terminal device deactivates the first connection.

In some embodiments, the terminal device may be a remote terminal or an anchor terminal (anchor UE).

In some embodiments, whether to release the first connection may be determined by the terminal device, or may be determined by the network device.

For example, the terminal device independently determines to release the first connection.

For another example, the terminal device may release the first connection in response to an instruction of the network device.

In some embodiments, whether to deactivate the first connection may be determined by the terminal device, or may be determined by the network device.

For example, the terminal device independently determines to deactivate the first connection.

For another example, the terminal device may deactivate the first connection in response to an instruction of the network device.

It should be understood that for specific implementation of the method 600, reference may be made to related implementation of the method 500. For brevity, details are not described herein again.

In some embodiments, the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

In some embodiments, the process of releasing, by the terminal device, the first connection between the terminal device and the network device includes:
receiving, by the terminal device, eighth indication information sent by the network device, where the eighth indication information is used for releasing the first connection between the terminal device and the network device.

In some embodiments, the eighth indication information is used for releasing at least one of frequency information, resource information, radio link control RLC channel configuration information, or adaptation layer configuration information that is related to the first connection.

In some embodiments, the eighth indication information is carried by using a sidelink configuration dedicated new radio information element SL-ConfigDedicatedNR IE.

In some embodiments, in a case that the first connection is the indirect connection between the terminal device and the network device, the eighth indication information is carried by using the SL-ConfigDedicatedNR IE.

In some embodiments, the eighth indication information is carried by using a secondary cell to release list sCellToReleaseList IE and/or an RLC bearer to release list rlc-BearerToReleaseList IE.

In some embodiments, in a case that the first connection is the direct connection between the terminal device and the network device, the eighth indication information is carried by using an sCellToReleaseList IE and/or an rlc-BearerToReleaseList IE.

In some embodiments, the process of releasing, by the terminal device, the first connection between the terminal device and the network device includes:
receiving, by the terminal device, ninth indication information sent by the network device, where the ninth indication information is used for releasing a primary cell on the first connection.

In some embodiments, the ninth indication information is carried by using radio resource control RRC reconfiguration signalling.

In some embodiments, the process of deactivating, by the network device, the first connection includes:
receiving, by the terminal device, tenth indication information sent by the network device, where the tenth indication information is used for deactivating configuration information related to the first connection.

In some embodiments, the tenth indication information is used for deactivating at least one of frequency information, resource information, RLC channel configuration information, or adaptation layer configuration information that is related to the first connection.

In some embodiments, the tenth indication information is carried by using radio resource control RRC signalling and/or a media access control MAC control element CE.

In some embodiments, the process of deactivating, by the terminal device, the first connection includes:
receiving, by the terminal device, eleventh indication information sent by the network device, where the eleventh indication information is used for deactivating a bandwidth part BWP at a first frequency, and the first frequency is a frequency related to the first connection.

In some embodiments, the method 600 further includes:
handing over, by the terminal device, a home cell or a primary cell of the terminal device from the first connection to the second connection.

In some embodiments, the process of handing over, by the terminal device, a home cell or a primary cell of the terminal device from the first connection to the second connection includes:
receiving, by the terminal device, twelfth indication information sent by the network device, where the twelfth indication information is used to instruct to hand over the home cell or the primary cell of the terminal device from the first connection to the second connection.

In some embodiments, the twelfth indication information is carried by using a reconfiguration with sync Reconfiguration WithSync IE.

In some embodiments, the method 600 further includes:
maintaining, by the terminal device, a home cell or a primary cell of the terminal device unchanged, in a case that a ReconfigurationWithSync IE of the network device is not received.

The following describes this embodiment of this application from a perspective of interaction between a remote terminal and a network device with reference to Embodiment 3 and Embodiment 4. The remote terminal may correspond to the terminal device above.

Embodiment 3: The first connection is a direct connection, that is, a to-be-released connection or a to-be-deactivated connection is a direct connection.

For example, a connection before handover between the terminal device and the network device may be shown in FIG. 3; and, a connection after handover between the terminal device and the network device may be shown in FIG. 5 or FIG. 11.

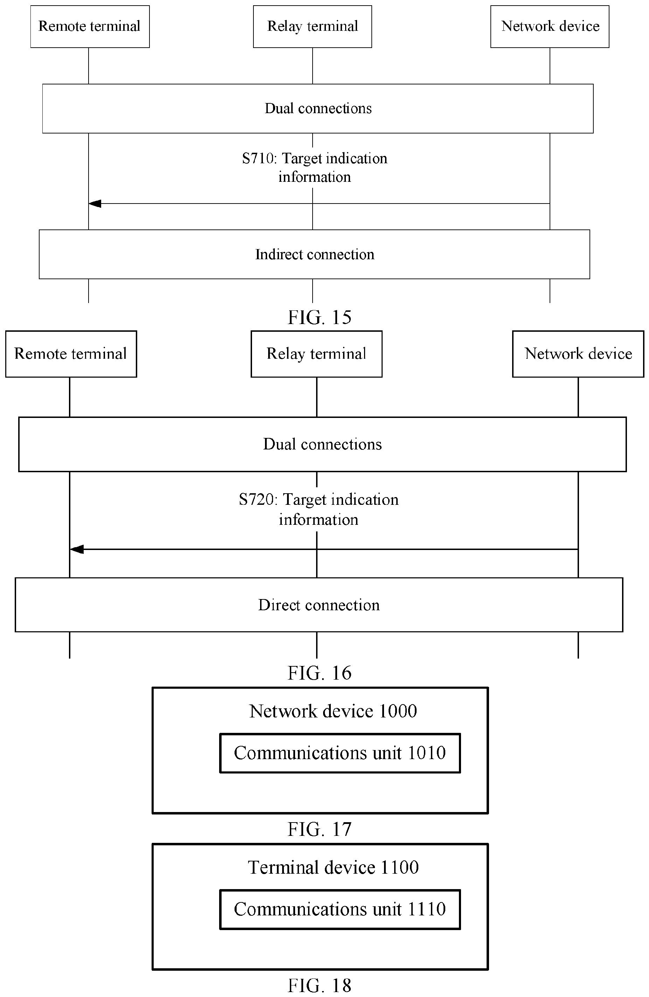

As shown in FIG. 15, the method may include step S720.

In step S720, the network device sends target indication information to the remote terminal.

Optionally, the target indication information may include at least one of the foregoing eighth indication information, ninth indication information, tenth indication information, eleventh indication information, or twelfth indication information.

In some embodiments, the network device may release a direct connection by using the eighth indication information.

In some embodiments, the eighth indication information is carried by using an sCellToReleaseList IE and/or an rlc-BearerToReleaseList IE.

In some embodiments, the network device releases a primary cell or a home cell on a direct connection by using the ninth indication information, or hands over the home cell or the primary cell of the terminal device from a direct connection to an indirect connection to release the direct connection.

In some embodiments, the ninth indication information is carried by using RRCReconfiguration.

In some embodiments, the network device may deactivate a direct connection by using the tenth indication information.

As an example instead of a limitation, the tenth indication information is carried by using RRC signalling and/or a MAC CE.

In some embodiments, the network device may use the eleventh indication information to instruct to deactivate a BWP corresponding to a frequency on the direct connection.

In some embodiments, the network device may hand over, by using the twelfth indication information, the home cell or the primary cell of the terminal device from a direct connection to an indirect connection.

Embodiment 4: The first connection is an indirect connection, that is, a to-be-released connection or a to-be-deactivated connection is an indirect connection.

For example, a connection before handover between the terminal device and the network device may be shown in FIG. 3; and a connection after handover between the terminal device and the network device may be shown in FIG. 4 or FIG. 10.

As shown in FIG. 16, the method may include step S730.

In step S730, the network device sends target indication information to the remote terminal.

Optionally, the target indication information may include at least one of the foregoing eighth indication information, ninth indication information, tenth indication information, eleventh indication information, or twelfth indication information.

In some embodiments, the network device may release an indirect connection by using the eighth indication information.

In some embodiments, the eighth indication information is carried by using an SL-ConfigDedicatedNR IE.

In some embodiments, the network device releases a primary cell or a home cell on an indirect connection by using the ninth indication information, or hands over the home cell or the primary cell of the terminal device from an indirect connection to a direct connection to release the indirect connection.

In some embodiments, the ninth indication information is carried by using RRCReconfiguration.

In some embodiments, the network device may deactivate an indirect connection by using the tenth indication information.

As an example instead of a limitation, the tenth indication information is carried by using RRC signalling and/or a MAC CE.

In some embodiments, the network device may instruct, by using the eleventh indication information, to deactivate a BWP corresponding to a frequency on the indirect connection.

In some embodiments, the network device may hand over, by using the twelfth indication information, the home cell or the primary cell of the terminal device from an indirect connection to a direct connection.

In conclusion, in this embodiment of this application, in a case that the first connection and the second connection are established between the terminal device and the network device, the connection status between the terminal device and the network device is switched from a plurality of connections to a single connection through releasing or deactivating one of the first connection and the second connection.

The foregoing describes the method embodiments of this application in detail with reference to FIG. 6 to FIG. 16. The following describes the apparatus embodiments of this application in detail with reference to FIG. 17 to FIG. 27. It should be understood that the apparatus embodiments correspond to the method embodiments. For similar description, reference may be made to the method embodiments.

FIG. 17 is a schematic block diagram of a network device 1000 according to an embodiment of this application. A first connection is established between the network device and a terminal device. As shown with FIG. 17, the network device 1000 includes:
a communications unit 1010, configured to send first indication information to the terminal device, where the first indication information is used for adding a second connection between the terminal device and the network device.

In some embodiments, the first indication information is carried by using a sidelink configuration dedicated new radio information element SL-ConfigDedicatedNR IE.

In some embodiments, the first indication information is used to indicate at least one of the following information:
frequency information, resource information, radio link control RLC channel configuration information, or adaptation layer configuration information that is related to the second connection.

In some embodiments, the communications unit 1010 is further configured to:
send second indication information to the terminal device, where the second indication information is used for handing over a home cell or a primary cell of the terminal device from the first connection to the second connection.

In some embodiments, the second indication information is carried by using a reconfiguration with sync Reconfiguration WithSync IE.

In some embodiments, the communications unit 1010 is further configured to:
send third indication information to the terminal device, where the third indication information is used for configuring, as a secondary cell, a cell corresponding to a frequency on the first connection.

In some embodiments, the communications unit 1010 is further configured to:
send fourth indication information to the terminal device, where the fourth indication information is used for determining an association between a bearer between the terminal device and the network device and a connection between the terminal device and the network device.

In some embodiments, the fourth indication information is used to indicate at least one of the following:
that a first bearer between the terminal device and the network device is associated with an RLC entity and/or an adaptation layer entity on the first connection;
that a first bearer between the terminal device and the network device is not associated with an RLC entity and/or an adaptation layer entity on the first connection;
that a second bearer between the terminal device and the network device is associated with an RLC entity and/or an adaptation layer entity on the second connection; or
that a second bearer between the terminal device and the network device is not associated with an RLC entity and/or an adaptation layer entity on the second connection.

In some embodiments, the network device further includes:
a processing unit, configured to maintain the home cell or the primary cell of the terminal device unchanged.

In some embodiments, the communications unit 1010 is further configured to:
in a case of maintaining the home cell or the primary cell of the terminal device unchanged, send no Reconfiguration WithSync IE to the terminal device.

In some embodiments, the network device further includes:
a processing unit, configured to maintain at least one of frequency information, resource information, or RLC channel configuration information that is related to the first connection occupied.

In some embodiments, the first connection is a direct connection between the terminal device and the network device, and the second connection is an indirect connection between the terminal device and the network device.

In some embodiments, the communications unit 1010 is further configured to:
send, by the network device, identity information of a relay terminal and/or timer-related information to the terminal device.

In some embodiments, the timer-related information is used for controlling establishing of the second connection.

In some embodiments, the identity information of the relay terminal and/or the timer-related information is included in a ReconfigurationWithSync IE.

In some embodiments, the identity information of the relay terminal and/or the timer-related information is not included in a ReconfigurationWithSync IE.

In some embodiments, the communications unit 1010 is further configured to:
send, by the network device, fifth indication information to the terminal device, where the fifth indication information is used to indicate at least one of the following operations:
reserving an access layer configuration on the direct connection; or
establishing an access layer configuration on the indirect connection.

In some embodiments, the first connection is an indirect connection between the terminal device and the network device, and the second connection is a direct connection between the terminal device and the network device.

In some embodiments, the communications unit 1010 is further configured to:
send, by the network device, sixth indication information to the terminal device, where the sixth indication information is used to indicate at least one of the following operations:
establishing an access layer configuration on the direct connection; or
reserving an access layer configuration on the indirect connection.

In some embodiments, the access layer configuration on the direct connection includes at least one of the following:
an RLC channel or a cell-related configuration on the direct connection.

In some embodiments, the access layer configuration on the indirect connection includes at least one of the following:
an RLC channel, an adaptation layer entity, or a frequency-related configuration on the indirect connection.

Optionally, in some embodiments, the communications unit may be a communications interface or a transceiver, or an input/output interface of a communications chip or a system-on-chip. The processing unit may be one or more processors.

It should be understood that the network device 1000 in this embodiment of this application may correspond to the network device in the method embodiment of this application, and the foregoing and other operations and/or functions of the units in the network device 1000 are separately used to implement corresponding processes of the network device in the method 200 shown in FIG. 6 to FIG. 8. For brevity, details are not described herein again.

FIG. 18 is a schematic block diagram of a terminal device 1100 according to an embodiment of this application. A first connection is established between the terminal device and a network device. As shown with FIG. 18, the terminal device 1100 includes:
a communications unit 1110, configured to receive first indication information sent by the network device, where the first indication information is used for adding a second connection between the terminal device and the network device.

In some embodiments, the first indication information is carried by using a sidelink configuration dedicated new radio information element SL-ConfigDedicatedNR IE.

In some embodiments, the first indication information is used to indicate at least one of the following information:
frequency information, resource information, radio link control RLC channel configuration information, or adaptation layer configuration information that is related to the second connection.

In some embodiments, the communications unit 1110 is further configured to:
receive second indication information sent by the network device, where the second indication information is used for handing over a home cell or a primary cell of the terminal device from the first connection to the second connection.

In some embodiments, the second indication information is carried by using a reconfiguration with sync Reconfiguration WithSync IE.

In some embodiments, the communications unit 1110 is further configured to:
receive third indication information sent by the network device, where the third indication information is used for configuring, as a secondary cell, a cell corresponding to a frequency on the first connection.

In some embodiments, the communications unit 1110 is further configured to:
receive fourth indication information sent by the network device, where the fourth indication information is used for determining a mapping relationship between a bearer between the terminal device and the network device and a connection between the terminal device and the network device.

In some embodiments, the fourth indication information is used to indicate at least one of the following:
that a first bearer between the terminal device and the network device is associated with an RLC entity and/or an adaptation layer entity on the first connection;
that a first bearer between the terminal device and the network device is not associated with an RLC entity and/or an adaptation layer entity on the first connection;
that a second bearer between the terminal device and the network device is associated with an RLC entity and/or an adaptation layer entity on the second connection; or
that a second bearer between the terminal device and the network device is not associated with an RLC entity and/or an adaptation layer entity on the second connection.

In some embodiments, the terminal device further includes:
a processing unit, configured to: in a case that a Reconfiguration With Sync IE sent by the network device is not received, determine to maintain a home cell or a primary cell of the terminal device unchanged.

In some embodiments, the first connection is a direct connection between the terminal device and the network device, and the second connection is an indirect connection between the terminal device and the network device.

In some embodiments, the communications unit 1110 is further configured to:
receive identity information of a relay terminal and/or timer-related information that is sent by the network device.

In some embodiments, the timer-related information is used for controlling establishing of the second connection.

In some embodiments, the identity information of the relay terminal and/or the timer-related information is included in a ReconfigurationWithSync IE.

In some embodiments, the identity information of the relay terminal and/or the timer-related information is not included in a ReconfigurationWithSync IE.

In some embodiments, the communications unit 1110 is further configured to:
receive fifth indication information sent by the network device, where the fifth indication information is used to indicate at least one of the following operations:
reserving an access layer configuration on the direct connection; or
establishing an access layer configuration on the indirect connection.

In some embodiments, the first connection is an indirect connection between the terminal device and the network device, and the second connection is a direct connection between the terminal device and the network device.

In some embodiments, the communications unit 1110 is further configured to:
receive sixth indication information sent by the network device, where the sixth indication information is used to indicate at least one of the following operations:
establishing an access layer configuration on the direct connection; or
reserving an access layer configuration on the indirect connection.

In some embodiments, the access layer configuration on the direct connection includes at least one of the following:
an RLC channel or a cell-related configuration on the direct connection.

In some embodiments, the access layer configuration on the indirect connection includes at least one of the following:
an RLC channel, an adaptation layer entity, or a frequency-related configuration on the indirect connection.

Optionally, in some embodiments, the communications unit may be a communications interface or a transceiver, or an input/output interface of a communications chip or a system-on-chip. The processing unit may be one or more processors.

It should be understood that the terminal device 1100 in this embodiment of this application may correspond to the terminal device in the method embodiment of this application, and the foregoing and other operations and/or functions of the units in the terminal device 1100 are separately used to implement corresponding processes of the terminal device in the method 200 shown in FIG. 6 to FIG. 8. For brevity, details are not described herein again.

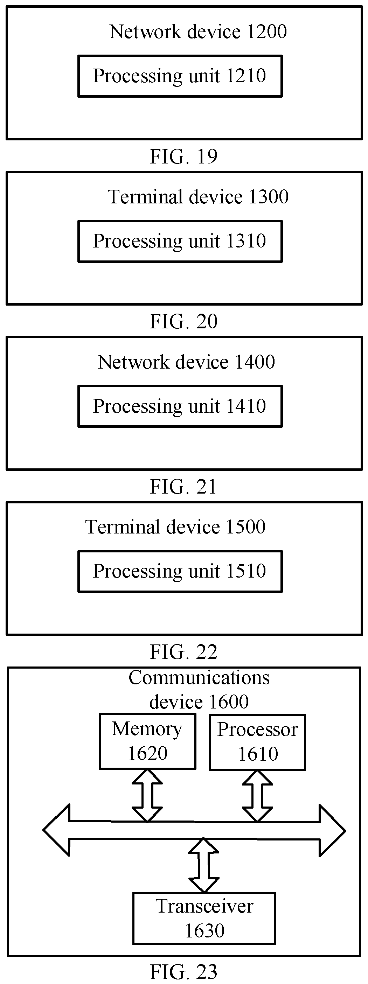

FIG. 19 is a schematic block diagram of a network device 1200 according to an embodiment of this application. A first connection and a second connection are established between the network device and a terminal device. The second connection is in an inactive state. As shown in FIG. 19, the network device 1200 includes:
a processing unit 1210, configured to activate the second connection.

In some embodiments, the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

In some embodiments, the network device further includes:
a communications unit, configured to send seventh indication information to the terminal device, where the seventh indication information is used for activating the second connection.

In some embodiments, the seventh indication information is used for activating at least one of the frequency information, the resource information, the radio link control RLC channel configuration information, or the adaptation layer configuration information that is related to the second connection.

In some embodiments, the seventh indication information is carried by using radio resource control RRC signalling and/or a media access control MAC control element CE.

Optionally, in some embodiments, the communications unit may be a communications interface or a transceiver, or an input/output interface of a communications chip or a system-on-chip. The processing unit may be one or more processors.

It should be understood that the network device 1200 in this embodiment of this application may correspond to the network device in the method embodiment of this application, and the foregoing and other operations and/or functions of the units in the network device 1200 are separately used to implement corresponding processes of the network device in the method 300 shown in FIG. 9 to FIG. 11. For brevity, details are not described herein again.

FIG. 20 is a schematic block diagram of a terminal device 1300 according to an embodiment of this application. A first connection and a second connection are established between the terminal device and a network device. The second connection is in an inactive state. As shown with FIG. 20, the terminal device 1300 includes:
a processing unit 1310, configured to activate the second connection.

In some embodiments, the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

In some embodiments, the terminal device further includes:
a communications unit, configured to receive seventh indication information sent by the network device, where the seventh indication information is used for activating the second connection.

In some embodiments, the seventh indication information is used for activating at least one of the frequency information, the resource information, the radio link control RLC channel configuration information, or the adaptation layer configuration information that is related to the second connection.

In some embodiments, the seventh indication information is carried by using radio resource control RRC signalling and/or a media access control MAC control element CE.

Optionally, in some embodiments, the communications unit may be a communications interface or a transceiver, or an input/output interface of a communications chip or a system-on-chip. The processing unit may be one or more processors.

It should be understood that the terminal device 1300 in this embodiment of this application may correspond to the terminal device in the method embodiment of this application, and the foregoing and other operations and/or functions of the units in the terminal device 1300 are separately used to implement corresponding processes of the terminal device in the method 400 shown in FIG. 12. For brevity, details are not described herein again.

FIG. 21 is a schematic block diagram of a network device 1400 according to an embodiment of this application. A first connection and a second connection are established between the network device and a terminal device. As shown with FIG. 21, the network device 1400 includes:
a processing unit 1410, configured to release the first connection between the terminal device and the network device, and/or deactivate the first connection.

In some embodiments, the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

In some embodiments, the network device further includes:
a communications unit, configured to send eighth indication information to the terminal device, where the eighth indication information is used for releasing the first connection between the terminal device and the network device.

In some embodiments, the eighth indication information is used for releasing at least one of frequency information, resource information, radio link control RLC channel configuration information, or adaptation layer configuration information that is related to the first connection.

In some embodiments, the eighth indication information is carried by using a sidelink configuration dedicated new radio information element SL-ConfigDedicatedNR IE.

In some embodiments, in a case that the first connection is the indirect connection between the terminal device and the network device, the network device releases the indirect connection between the terminal device and the network device by using the SL-ConfigDedicatedNR IE.

In some embodiments, the eighth indication information is carried by using a secondary cell to release list sCellToReleaseList IE and/or an RLC bearer to release list rlc-BearerToReleaseList IE.

In some embodiments, in a case that the first connection is the direct connection between the terminal device and the network device, the network device releases the direct connection between the terminal device and the network device by using a secondary cell to release list sCellToReleaseList IE and/or an RLC bearer to release list rlc-BearerToReleaseList IE.

In some embodiments, the network device further includes:
a communications unit, configured to send ninth indication information to the terminal device, where the ninth indication information is used for releasing a primary cell on the first connection.

In some embodiments, the ninth indication information is carried by using radio resource control RRC reconfiguration signalling.

In some embodiments, the network device further includes:
a communications unit, configured to send tenth indication information to the terminal device, where the tenth indication information is used for deactivating configuration information related to the first connection.

In some embodiments, the tenth indication information is used for deactivating at least one of frequency information, resource information, RLC channel configuration information, or adaptation layer configuration information that is related to the first connection.

In some embodiments, the tenth indication information is carried by using radio resource control RRC signalling and/or a media access control MAC control element CE.

In some embodiments, the network device further includes:
a communications unit, configured to send eleventh indication information to the terminal device, where the eleventh indication information is used for deactivating a bandwidth part BWP at a first frequency, and the first frequency is a frequency related to the first connection.

In some embodiments, the processing unit 1410 is further configured to:
hand over a home cell or a primary cell of the terminal device from the first connection to the second connection.

In some embodiments, the network device further includes:
a communications unit, configured to send twelfth indication information to the terminal device, where the twelfth indication information is used to instruct to hand over the home cell or the primary cell of the terminal device from the first connection to the second connection.

In some embodiments, the twelfth indication information is carried by using a reconfiguration with sync Reconfiguration WithSync IE.

In some embodiments, the processing unit 1410 is further configured to:
maintain the home cell or the primary cell of the terminal device unchanged.

In some embodiments, the network device further includes:
a communications unit, configured to: in a case of maintaining the home cell or the primary cell of the terminal device unchanged, send no ReconfigurationWithSync IE to the terminal device.

Optionally, in some embodiments, the communications unit may be a communications interface or a transceiver, or an input/output interface of a communications chip or a system-on-chip. The processing unit may be one or more processors.

It should be understood that the network device 1400 in this embodiment of this application may correspond to the network device in the method embodiment of this application, and the foregoing and other operations and/or functions of the units in the network device 1400 are separately used to implement corresponding processes of the network device in the method 500 shown in FIG. 13 to FIG. 16. For brevity, details are not described herein again.

FIG. 22 is a schematic block diagram of a terminal device 1500 according to an embodiment of this application. A first connection and a second connection are established between the terminal device and a network device. As shown in FIG. 22, the terminal device 1500 includes:
a processing unit 1510, configured to release the first connection between the terminal device and the network device, and/or
deactivate the first connection.

In some embodiments, the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

In some embodiments, the terminal device further includes:
a communications unit, configured to receive eighth indication information sent by the network device, where the eighth indication information is used for releasing the first connection between the terminal device and the network device.

In some embodiments, the eighth indication information is used for releasing at least one of frequency information, resource information, radio link control RLC channel configuration information, or adaptation layer configuration information that is related to the first connection.

In some embodiments, the eighth indication information is carried by using a sidelink configuration dedicated new radio information element SL-ConfigDedicatedNR IE.

In some embodiments, in a case that the first connection is the indirect connection between the terminal device and the network device, the eighth indication information is carried by using the SL-ConfigDedicatedNR IE.

In some embodiments, the eighth indication information is carried by using a secondary cell to release list sCellToReleaseList IE and/or an RLC bearer to release list rlc-BearerToReleaseList IE.

In some embodiments, in a case that the first connection is the direct connection between the terminal device and the network device, the eighth indication information is carried by using an sCellToReleaseList IE and/or an rlc-BearerToReleaseList IE.

In some embodiments, the terminal device further includes:
a communications unit, configured to receive ninth indication information sent by the network device, where the ninth indication information is used for releasing a primary cell on the first connection.

In some embodiments, the ninth indication information is carried by using radio resource control RRC reconfiguration signalling.

In some embodiments, the terminal device further includes:
a communications unit, configured to receive tenth indication information sent by the network device, where the tenth indication information is used for deactivating configuration information that is related to the first connection.

In some embodiments, the tenth indication information is used for deactivating at least one of frequency information, resource information, RLC channel configuration information, or adaptation layer configuration information that is related to the first connection.

In some embodiments, the tenth indication information is carried by using radio resource control RRC signalling and/or a media access control MAC control element CE.

In some embodiments, the terminal device further includes:
a communications unit, configured to receive eleventh indication information sent by the network device, where the eleventh indication information is used for deactivating a bandwidth part BWP at a first frequency, and the first frequency is a frequency related to the first connection.

In some embodiments, the processing unit 1510 is further configured to:
hand over a home cell or a primary cell of the terminal device from the first connection to the second connection.

In some embodiments, the terminal device further includes:
a communications unit, configured to receive twelfth indication information sent by the network device, where the twelfth indication information is used to instruct to hand over the home cell or the primary cell of the terminal device from the first connection to the second connection.

In some embodiments, the twelfth indication information is carried by using a reconfiguration with sync Reconfiguration WithSync IE.

In some embodiments, the processing unit 1510 is further configured to:
in a case that a Reconfiguration WithSync IE of the network device is not received, maintain, by the terminal device, a home cell or a primary cell of the terminal device unchanged.

Optionally, in some embodiments, the communications unit may be a communications interface or a transceiver, or an input/output interface of a communications chip or a system-on-chip. The processing unit may be one or more processors.

It should be understood that the terminal device 1500 in this embodiment of this application may correspond to the terminal device in the method embodiment of this application, and the foregoing and other operations and/or functions of the units in the terminal device 1500 are separately used to implement corresponding processes of the terminal device in the method 600 shown in FIG. 13 to FIG. 16. For brevity, details are not described herein again.

FIG. 23 is a schematic diagram of a structure of a communications device 1600 according to an embodiment of this application. The communications device 1600 shown in FIG. 23 includes a processor 1610, and the processor 1610 may invoke a computer program from a memory and run the computer program to implement the method in the embodiment of this application.

Optionally, as shown in FIG. 23, the communications device 1600 may further include a memory 1620. The processor 1610 may invoke a computer program from the memory 1620 and run the computer program to implement the method in an embodiment of this application.

The memory 1620 may be a separate device independent of the processor 1610, or may be integrated in the processor 1610.

Optionally, as shown in FIG. 23, the communications device 1600 may further include a transceiver 1630. The processor 1610 may control the transceiver 1630 to communicate with another device, specifically, may transmit information or data to the another device or receive information or data transmitted by the another device.

The transceiver 1630 may include a transmitter and a receiver. The transceiver 1630 may further include an antenna. A quantity of antennas may be one or more.

Optionally, the communications device 1600 may be specifically the network device in embodiments of this application, and the communications device 1600 may implement corresponding processes implemented by the network device in various methods in embodiments of this application. For brevity, details are not described herein again.

Optionally, the communications device 1600 may be specifically the mobile terminal/terminal device in embodiments of this application, and the communications device 1600 may implement corresponding processes implemented by the mobile device/terminal device in various methods in embodiments of this application. For brevity, details are not described herein again.

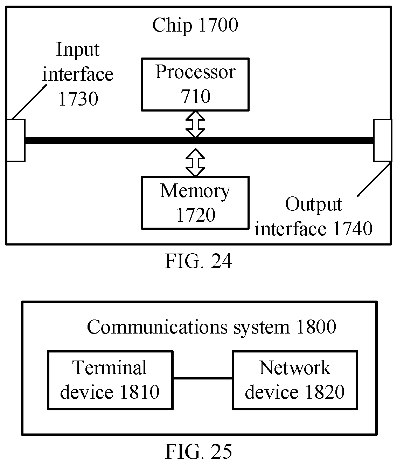

FIG. 24 is a schematic diagram of a structure of a chip according to an embodiment of this application. The chip 1700 shown in FIG. 24 includes a processor 1710, and the processor 1710 may invoke a computer program from a memory and run the computer program to implement the method in the embodiment of this application.

Optionally, as shown in FIG. 24, the chip 1700 may further include a memory 1720. The processor 1710 may invoke a computer program from the memory 1720 and run the computer program to implement the method in the embodiment of this application.

The memory 1720 may be a separate device independent of the processor 1710, or may be integrated in the processor 710.

Optionally, the chip 1700 may further include an input interface 1730. The processor 1710 may control the input interface 1730 to communicate with another device or chip, and specifically, may obtain information or data transmitted by the another device or chip.

Optionally, the chip 1700 may further include an output interface 1740. The processor 1710 may control the output interface 740 to communicate with another device or chip, and specifically, may output information or data to the another device or chip.

Optionally, the chip may be applied to the network device in embodiments of this application, and the chip may implement corresponding processes implemented by the network device in various methods in embodiments of this application. For brevity, details are not described herein again.

Optionally, the chip may be applied to the mobile terminal/terminal device in embodiments of this application, and the chip may implement corresponding processes implemented by the mobile terminal/terminal device in various methods in embodiments of this application. For brevity, details are not described herein again.

It should be understood that the chip mentioned in this embodiment of this application may also be referred to as a system-level chip, a system chip, a chip system, a system-on-chip, or the like.

FIG. 25 is a schematic block diagram of a communications system 1800 according to an embodiment of this application. As shown in FIG. 25, the communications system 1800 includes a terminal device 1810 and a network device 1820.

The terminal device 1810 may be used to implement corresponding functions implemented by the terminal device in the foregoing methods, and the network device 1820 may be used to implement corresponding functions implemented by the network device in the foregoing methods. For brevity, details are not described herein again.

It should be understood that a processor in this embodiment of this application may be an integrated circuit chip having a signal processing capability. In an implementation process, the steps in the foregoing method embodiments can be implemented by using a hardware integrated logical circuit in the processor, or by using the instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware thereof.

It may be understood that, in embodiments of this application, the memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and functions as an external cache. Through example rather than limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories in the systems and the methods described in this specification include but are not limited to these and any memory of another appropriate type.

It should be understood that, by way of example rather than limitative description, for example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory in this embodiment of this application includes but is not limited to these memories and any memory of another appropriate type.

An embodiment of this application further provides a computer-readable storage medium for storing a computer program.

Optionally, the computer-readable storage medium may be applied to the network device in embodiments of this application, and the computer program causes a computer to perform corresponding processes implemented by the network device in various methods in embodiments of this application. For brevity, details are not described herein again.

Optionally, the computer-readable storage medium may be applied to the mobile terminal/terminal device in embodiments of this application, and the computer program causes a computer to perform corresponding processes implemented by the mobile terminal/terminal device in various methods in embodiments of this application. For brevity, details are not described herein again.

An embodiment of this application further provides a computer program product including computer program instructions.

Optionally, the computer program product may be applied to the network device in embodiments of this application, and the computer program instructions cause a computer to perform corresponding processes implemented by the network device in various methods in embodiments of this application. For brevity, details are not described herein again.

Optionally, the computer program product may be applied to the mobile terminal/terminal device in embodiments of this application, and the computer program instructions cause a computer to perform corresponding processes implemented by the mobile terminal/terminal device in various methods in embodiments of this application. For brevity, details are not described herein again.

An embodiment of this application further provides a computer program.

Optionally, the computer program may be applied to the network device in embodiments of this application. The computer program is run on a computer to cause the computer to perform a corresponding procedure implemented by the network device in various methods in embodiments of this application. For brevity, details are not described herein again.

Optionally, the computer program may be applied to the mobile terminal/the terminal device in embodiments of this application. The computer program is run on a computer to cause the computer to perform a corresponding procedure implemented by the mobile terminal/the terminal device in various methods in embodiments of this application. For brevity, details are not described herein again.

A person of ordinary skill in the field may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In several embodiments provided in this application, it should be understood that, the disclosed system, apparatus, and method may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, and may be at one position, or may be distributed on a plurality of network elements. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, applied to a network device, wherein a first connection is established between the network device and a terminal device, and the method comprises:
sending, by the network device, first indication information to the terminal device, wherein the first indication information is used for adding a second connection between the terminal device and the network device.

2. The method according to claim 1, wherein the first indication information is carried by using a sidelink configuration dedicated new radio information element SL-ConfigDedicatedNR IE.

3. The method according to claim 1 or 2, wherein the first indication information is used to indicate at least one of following information:
frequency information, resource information, radio link control RLC channel configuration information, or adaptation layer configuration information that is related to the second connection.

4. The method according to any one of claims 1 to 3, wherein the method further comprises:
sending, by the network device, second indication information to the terminal device, wherein the second indication information is used for handing over a home cell or a primary cell of the terminal device from the first connection to the second connection.

5. The method according to claim 4, wherein the second indication information is carried by using a reconfiguration with sync Reconfiguration WithSync IE.

6. The method according to any one of claims 1 to 5, wherein the method further comprises:
sending, by the network device, third indication information to the terminal device, wherein the third indication information is used for configuring, as a secondary cell, a cell corresponding to a frequency on the first connection.

7. The method according to any one of claims 1 to 6, wherein the method further comprises:
sending, by the network device, fourth indication information to the terminal device, wherein the fourth indication information is used for determining an association relationship between a bearer between the terminal device and the network device and a connection between the terminal device and the network device.

8. The method according to claim 7, wherein the fourth indication information is used to indicate at least one of following:
that a first bearer between the terminal device and the network device is associated with an RLC entity and/or an adaptation layer entity on the first connection;
that a first bearer between the terminal device and the network device is not associated with an RLC entity and/or an adaptation layer entity on the first connection;
that a second bearer between the terminal device and the network device is associated with an RLC entity and/or an adaptation layer entity on the second connection; or
that a second bearer between the terminal device and the network device is not associated with an RLC entity and/or an adaptation layer entity on the second connection.

9. The method according to any one of claims 1 to 3, wherein the method further comprises:
maintaining, by the network device, a home cell or a primary cell of the terminal device unchanged.

10. The method according to claim 9, wherein the maintaining, by the network device, a home cell or a primary cell of the terminal device unchanged comprises:
sending, by the network device, no Reconfiguration WithSync IE to the terminal device.

11. The method according to any one of claims 1 to 10, wherein the method further comprises:
maintaining, by the network device, at least one of frequency information, resource information, or RLC channel configuration information that is related to the first connection occupied.

12. The method according to any one of claims 1 to 11, wherein the method further comprises:
sending, by the network device, identity information of a relay terminal and/or timer-related information to the terminal device.

13. The method according to claim 12, wherein the timer-related information is used for controlling setup of the second connection.

14. The method according to claim 12 or 13, wherein the identity information of the relay terminal and/or the timer-related information is comprised in a ReconfigurationWithSync IE.

15. The method according to claim 12 or 13, wherein the identity information of the relay terminal and/or the timer-related information is not comprised in a ReconfigurationWithSync IE.

16. The method according to any one of claims 1 to 15, wherein the first connection is a direct connection between the terminal device and the network device, and the second connection is an indirect connection between the terminal device and the network device.

17. The method according to claim 16, wherein the method further comprises:
sending, by the network device, fifth indication information to the terminal device, wherein the fifth indication information is used to indicate at least one of following operations:
reserving an access layer configuration on the direct connection; or
setting up an access layer configuration on the indirect connection.

18. The method according to any one of claims 1 to 15, wherein the first connection is an indirect connection between the terminal device and the network device, and the second connection is a direct connection between the terminal device and the network device.

19. The method according to claim 18, wherein the method further comprises:
sending, by the network device, sixth indication information to the terminal device, wherein the sixth indication information is used to indicate at least one of following operations:
setting up an access layer configuration on the direct connection; or
reserving an access layer configuration on the indirect connection.

20. The method according to claim 17 or 19, wherein the access layer configuration on the direct connection comprises at least one of following: an RLC channel on the direct connection, or a cell-related configuration.

21. The method according to claim 17 or 19, wherein the access layer configuration on the indirect connection comprises at least one of following: an RLC channel on the indirect connection, an adaptation layer entity, or a frequency-related configuration.

22. A wireless communication method, applied to a terminal device, wherein a first connection is established between the terminal device and a network device, and the method comprises:
receiving, by the terminal device, first indication information sent by the network device, wherein the first indication information is used for adding a second connection between the terminal device and the network device.

23. The method according to claim 22, wherein the first indication information is carried by using a sidelink configuration dedicated new radio information element SL-ConfigDedicatedNR IE.

24. The method according to claim 22 or 23, wherein the first indication information is used to indicate at least one of following information:
frequency information, resource information, radio link control RLC channel configuration information, or adaptation layer configuration information that is related to the second connection.

25. The method according to any one of claims 22 to 24, wherein the method further comprises:
receiving, by the terminal device, second indication information sent by the network device, wherein the second indication information is used for handing over a home cell or a primary cell of the terminal device from the first connection to the second connection.

26. The method according to claim 25, wherein the second indication information is carried by using a reconfiguration with sync ReconfigurationWithSync IE.

27. The method according to any one of claims 22 to 26, wherein the method further comprises:
receiving, by the terminal device, third indication information sent by the network device, wherein the third indication information is used for configuring, as a secondary cell, a cell corresponding to a frequency on the first connection.

28. The method according to any one of claims 22 to 27, wherein the method further comprises:
receiving, by the terminal device, fourth indication information sent by the network device, wherein the fourth indication information is used for determining a mapping relationship between a bearer between the terminal device and the network device and a connection between the terminal device and the network device.

29. The method according to claim 28, wherein the fourth indication information is used to indicate at least one of following:
that a first bearer between the terminal device and the network device is associated with an RLC entity and/or an adaptation layer entity on the first connection;
that a first bearer between the terminal device and the network device is not associated with an RLC entity and/or an adaptation layer entity on the first connection;
that a second bearer between the terminal device and the network device is associated with an RLC entity and/or an adaptation layer entity on the second connection; or
that a second bearer between the terminal device and the network device is not associated with an RLC entity and/or an adaptation layer entity on the second connection.

30. The method according to any one of claims 22 to 24, wherein the method further comprises:
in a case that a Reconfiguration WithSync IE sent by the network device is not received, determining, by the terminal device, to maintain a home cell or a primary cell of the terminal device unchanged.

31. The method according to any one of claims 22 to 30, wherein the method further comprises:
receiving, by the terminal device, identity information of a relay terminal and/or timer-related information that is sent by the network device.

32. The method according to claim 31, wherein the timer-related information is used for controlling setup of the second connection.

33. The method according to claim 31 or 32, wherein the identity information of the relay terminal and/or the timer-related information is comprised in a ReconfigurationWithSync IE.

34. The method according to claim 31 or 32, wherein the identity information of the relay terminal and/or the timer-related information is not comprised in a ReconfigurationWithSync IE.

35. The method according to any one of claims 22 to 34, wherein the first connection is a direct connection between the terminal device and the network device, and the second connection is an indirect connection between the terminal device and the network device.

36. The method according to claim 35, wherein the method further comprises:
receiving, by the terminal device, fifth indication information sent by the network device, wherein the fifth indication information is used to indicate at least one of following operations:
reserving an access layer configuration on the direct connection; or
setting up an access layer configuration on the indirect connection.

37. The method according to any one of claims 22 to 30, wherein the first connection is an indirect connection between the terminal device and the network device, and the second connection is a direct connection between the terminal device and the network device.

38. The method according to claim 37, wherein the method further comprises:
receiving, by the terminal device, sixth indication information sent by the network device, wherein the sixth indication information is used to indicate at least one of following operations:
setting up an access layer configuration on the direct connection; or
reserving an access layer configuration on the indirect connection.

39. The method according to claim 36 or 38, wherein the access layer configuration on the direct connection comprises at least one of following: an RLC channel on the direct connection, or a cell-related configuration.

40. The method according to claim 36 or 38, wherein the access layer configuration on the indirect connection comprises at least one of following: an RLC channel on the indirect connection, an adaptation layer entity, or a frequency-related configuration.

41. A wireless communication method, applied to a network device, wherein a first connection and a second connection are established between the network device and a terminal device, the second connection is in an inactive state, and the method comprises:
activating, by the network device, the second connection.

42. The method according to claim 41, wherein the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

43. The method according to claim 41 or 42, wherein the activating, by the network device, the second connection comprises:
sending, by the network device, seventh indication information to the terminal device, wherein the seventh indication information is used for activating the second connection.

44. The method according to claim 43, wherein the seventh indication information is used for activating at least one of frequency information, resource information, radio link control RLC channel configuration information, or adaptation layer configuration information that is related to the second connection.

45. The method according to claim 43 or 44, wherein the seventh indication information is carried by using radio resource control RRC signalling and/or a media access control MAC control element CE.

46. A wireless communication method, applied to a terminal device, wherein a first connection and a second connection are established between the terminal device and a network device, the second connection is in an inactive state, and the method comprises:
activating, by the terminal device, the second connection.

47. The method according to claim 46, wherein the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

48. The method according to claim 46 or 47, wherein the activating, by the terminal device, the second connection comprises:
receiving, by the terminal device, seventh indication information sent by the network device, wherein the seventh indication information is used for activating the second connection.

49. The method according to claim 48, wherein the seventh indication information is used for activating at least one of frequency information, resource information, radio link control RLC channel configuration information, or adaptation layer configuration information that is related to the second connection.

50. The method according to claim 48 or 49, wherein the seventh indication information is carried by using radio resource control RRC signalling and/or a media access control MAC control element CE.

51. A wireless communication method, applied to a network device, wherein a first connection and a second connection are established between the network device and a terminal device, and the method comprises:
releasing, by the network device, the first connection between the terminal device and the network device; and/or
deactivating, by the network device, the first connection.

52. The method according to claim 43, wherein
the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

53. The method according to claim 51 or 52, wherein the releasing, by the network device, the first connection between the terminal device and the network device comprises:
sending, by the network device, eighth indication information to the terminal device, wherein the eighth indication information is used for releasing the first connection between the terminal device and the network device.

54. The method according to claim 53, wherein the eighth indication information is used for releasing at least one of frequency information, resource information, radio link control RLC channel configuration information, or adaptation layer configuration information that is related to the first connection.

55. The method according to claim 53 or 54, wherein the eighth indication information is carried by using a sidelink configuration dedicated new radio information element SL-ConfigDedicatedNR IE.

56. The method according to claim 55, wherein in a case that the first connection is an indirect connection between the terminal device and the network device, the network device releases the indirect connection between the terminal device and the network device by using the SL-ConfigDedicatedNR IE.

57. The method according to claim 53 or 54, wherein the eighth indication information is carried by using a secondary cell to release list sCellToReleaseList IE and/or an RLC bearer to release list rlc-BearerToReleaseList IE.

58. The method according to claim 49, wherein in a case that the first connection is the direct connection between the terminal device and the network device, the network device releases the direct connection between the terminal device and the network device by using a secondary cell to release list sCellToReleaseList IE and/or an RLC bearer to release list rlc-BearerToReleaseList IE.

59. The method according to claim 43 or 44, wherein the releasing, by the network device, the first connection between the terminal device and the network device comprises:
sending, by the network device, ninth indication information to the terminal device, wherein the ninth indication information is used for releasing a primary cell on the first connection.

60. The method according to claim 59, wherein the ninth indication information is carried by using radio resource control RRC reconfiguration signalling.

61. The method according to any one of claims 51 to 60, wherein the deactivating, by the network device, the first connection comprises:
sending, by the network device, tenth indication information to the terminal device, wherein the tenth indication information is used for deactivating configuration information related to the first connection.

62. The method according to claim 61, wherein the tenth indication information is used for deactivating at least one of frequency information, resource information, RLC channel configuration information, or adaptation layer configuration information that is related to the first connection.

63. The method according to claim 61 or 62, wherein the tenth indication information is carried by using radio resource control RRC signalling and/or a media access control MAC control element CE.

64. The method according to any one of claims 51 to 60, wherein the deactivating, by the network device, the first connection comprises:
sending, by the network device, eleventh indication information to the terminal device, wherein the eleventh indication information is used for deactivating a bandwidth part BWP at a first frequency, and the first frequency is a frequency related to the first connection.

65. The method according to any one of claims 51 to 64, wherein the method further comprises:
handing over, by the network device, a home cell or a primary cell of the terminal device from the first connection to the second connection.

66. The method according to claim 65, wherein the handing over, by the network device, a home cell or a primary cell of the terminal device from the first connection to the second connection comprises:
sending, by the network device, twelfth indication information to the terminal device, wherein the twelfth indication information is used to instruct to hand over the home cell or the primary cell of the terminal device from the first connection to the second connection.

67. The method according to claim 66, wherein the twelfth indication information is carried by using a reconfiguration with sync ReconfigurationWithSync IE.

68. The method according to any one of claims 51 to 64, wherein the method further comprises:
maintaining, by the network device, a home cell or a primary cell of the terminal device unchanged.

69. The method according to claim 68, wherein the maintaining, by the network device, a home cell or a primary cell of the terminal device unchanged comprises:
sending, by the network device, no Reconfiguration With Sync IE to the terminal device.

70. A wireless communication method, applied to a terminal device, wherein a first connection and a second connection are established between the terminal device and a network device, and the method comprises:
releasing, by the terminal device, the first connection between the terminal device and the network device; and/or
deactivating, by the terminal device, the first connection.

71. The method according to claim 70, wherein
the first connection is an indirect connection between the terminal device and the network device, and the second connection is a direct connection between the terminal device and the network device; or
the first connection is a direct connection between the terminal device and the network device, and the second connection is an indirect connection between the terminal device and the network device.

72. The method according to claim 70 or 71, wherein the releasing, by the terminal device, the first connection between the terminal device and the network device comprises:
receiving, by the terminal device, eighth indication information sent by the network device, wherein the eighth indication information is used for releasing the first connection between the terminal device and the network device.

73. The method according to claim 72, wherein the eighth indication information is used for releasing at least one of frequency information, resource information, radio link control RLC channel configuration information, or adaptation layer configuration information that is related to the first connection.

74. The method according to claim 72 or 73, wherein the eighth indication information is carried by using a sidelink configuration dedicated new radio information element SL-ConfigDedicatedNR IE.

75. The method according to claim 74, wherein in a case that the first connection is an indirect connection between the terminal device and the network device, the eighth indication information is carried by using the SL-ConfigDedicatedNR IE.

76. The method according to claim 72 or 73, wherein the eighth indication information is carried by using a secondary cell to release list sCellToReleaseList IE and/or an RLC bearer to release list rlc-BearerToReleaseList IE.

77. The method according to claim 76, wherein in a case that the first connection is a direct connection between the terminal device and the network device, the eighth indication information is carried by using an sCellToReleaseList IE and/or an rlc-BearerToReleaseList IE.

78. The method according to claim 70 or 71, wherein the releasing, by the terminal device, the first connection between the terminal device and the network device comprises:
receiving, by the terminal device, ninth indication information sent by the network device, wherein the ninth indication information is used for releasing a primary cell on the first connection, and/or handing over a home cell or a primary cell of the terminal device from the first connection to the second connection.

79. The method according to claim 78, wherein the ninth indication information is carried by using radio resource control RRC reconfiguration signalling.

80. The method according to any one of claims 70 to 79, wherein the deactivating, by the terminal device, the first connection comprises:
receiving, by the terminal device, tenth indication information sent by the network device, wherein the tenth indication information is used for deactivating configuration information related to the first connection.

81. The method according to claim 80, wherein the tenth indication information is used for deactivating at least one of frequency information, resource information, RLC channel configuration information, or adaptation layer configuration information that is related to the first connection.

82. The method according to claim 80 or 81, wherein the tenth indication information is carried by using radio resource control RRC signalling and/or a media access control MAC control element CE.

83. The method according to any one of claims 70 to 79, wherein the deactivating, by the terminal device, the first connection comprises:
receiving, by the terminal device, eleventh indication information sent by the network device, wherein the eleventh indication information is used for deactivating a bandwidth part BWP at a first frequency, and the first frequency is a frequency related to the first connection.

84. The method according to any one of claims 70 to 83, wherein the method further comprises:
handing over, by the terminal device, a home cell or a primary cell of the terminal device from the first connection to the second connection.

85. The method according to claim 84, wherein the handing over, by the terminal device, a home cell or a primary cell of the terminal device from the first connection to the second connection comprises:
receiving, by the terminal device, twelfth indication information sent by the network device, wherein the twelfth indication information is used to instruct to hand over the home cell or the primary cell of the terminal device from the first connection to the second connection.

86. The method according to claim 85, wherein the twelfth indication information is carried by using a reconfiguration with sync ReconfigurationWithSync IE.

87. The method according to any one of claims 70 to 83, wherein the method further comprises:
in a case that a Reconfiguration WithSync IE of the network device is not received, maintaining, by the terminal device, a home cell or a primary cell of the terminal device unchanged.

88. A network device, comprising:
a communications unit, configured to send first indication information to a terminal device, wherein the first indication information is used for adding a second connection between the terminal device and the network device, and a first connection is established between the terminal device and the network device.

89. A terminal device, comprising:
a communications unit, configured to receive first indication information sent by a network device, wherein the first indication information is used for adding a second connection between the terminal device and the network device, and a first connection is established between the terminal device and the network device.

90. A network device, wherein a first connection and a second connection are established between the network device and a terminal device, the second connection is in an inactive state, and the network device comprises:
a processing unit, configured to activate the second connection.

91. A terminal device, wherein a first connection and a second connection are established between the terminal device and a network device, the second connection is in an inactive state, and the terminal device comprises:
a processing unit, configured to activate the second connection.

92. A network device, wherein a first connection and a second connection are established between the network device and a terminal device, and the network device comprises:
a processing unit, configured to release the first connection between the terminal device and the network device, and/or deactivate the first connection.

93. A terminal device, wherein a first connection and a second connection are established between the terminal device and a network device, and the terminal device comprises:
a processing unit, configured to release the first connection between the terminal device and the network device, and/or deactivate the first connection.

94. A network device, comprising a processor and a memory, wherein the memory is configured to store a computer program, and the processor is configured to invoke and run the computer program stored in the memory to perform the method according to any one of claims 1 to 21, the method according to any one of claims 41 to 45, or the method according to any one of claims 51 to 69.

95. A terminal device, comprising a processor and a memory, wherein the memory is configured to store a computer program, and the processor is configured to invoke and run the computer program stored in the memory to perform the method according to any one of claims 22 to 40, the method according to any one of claims 46 to 50, or the method according to any one of claims 70 to 87.

96. A chip, comprising a processor configured to invoke a computer program from a memory and run the computer program, to cause a device installed with the chip to perform the method according to any one of claims 1 to 21, the method according to any one of claims 41 to 45, the method according to any one of claims 51 to 69, the method according to any one of claims 22 to 40, the method according to any one of claims 46 to 50, or the method according to any one of claims 70 to 87.

97. A computer-readable storage medium, configured to store a computer program, wherein the computer program causes a computer to perform the method according to any one of claims 1 to 21, the method according to any one of claims 41 to 45, the method according to any one of claims 51 to 69, the method according to any one of claims 22 to 40, the method according to any one of claims 46 to 50, or the method according to any one of claims 70 to 87.

98. A computer program product, comprising computer program instructions, wherein the computer program instructions cause a computer to perform the method according to any one of claims 1 to 21, the method according to any one of claims 41 to 45, the method according to any one of claims 51 to 69, the method according to any one of claims 22 to 40, the method according to any one of claims 46 to 50, or the method according to any one of claims 70 to 87.

99. A computer program, wherein the computer program causes a computer to perform the method according to any one of claims 1 to 21, the method according to any one of claims 41 to 45, the method according to any one of claims 51 to 69, the method according to any one of claims 22 to 40, the method according to any one of claims 46 to 50, or the method according to any one of claims 70 to 87.
